# EUROPEAN PATENT APPLICATION

(11) **EP 2 094 025 A1**
(43) Date of publication of application: **26.08.2009**
(21) Application number: 07850265.5
(22) Date of filing: 07.12.2007
(51) Int. Cl.: H04Q 7/38, H04J 11/00, H04L 12/56, H04Q 7/36

(54) **COMMUNICATION CONTROL DEVICE, COMMUNICATION TERMINAL DEVICE, RADIO COMMUNICATION SYSTEM, AND COMMUNICATION METHOD**

(30) Priority: 08.12.2006 JP 2006331983
(71) Applicant: Sharp Kabushiki Kaisha, Osaka-shi, Osaka 545-8522 (JP); Osaka University, Suita-shi Osaka 565-0871 (JP); National Institute Of Information And Communication Technology, Tokyo 184-8795 (JP)
(72) Inventor: NAMBA, Hideo, Osaka-shi Osaka 545-8522 (JP); KUBOTA, Minoru, Osaka-shi Osaka 545-8522 (JP); HAMAGUCHI, Yasuhiro, Osaka-shi Osaka 545-8522 (JP); TO, Shimpei, Osaka-shi Osaka 545-8522 (JP); SAMPEI, Seiichi, Osaka 565-0871 (JP); HARADA, Hiroshi, Tokyo 184-8795 (JP)
(74) Representative: Müller - Hoffmann & Partner
(86) International application number: PCT/JP2007/073678
(87) International publication number: WO 2008/069310

(57) **Abstract**

The amount of information reported by a communication terminal apparatus to a communication control apparatus is reduced based on the congestion status of communication. Communication control 100 apparatus communicates with a communication terminal apparatus using frequency channels composed of two or more sub-channels defined by a predetermined frequency band includes: receiver 113 for receiving information data destined to the terminal apparatus; scheduler 113 for generating assignment information indicating the status of assignment of the received information data to each sub-channel; congestion information generator 103 for generating congestion information indicating the congestion degree of each sub-channel based on the generated assignment information; control information generator 104 for generating control information including the generated congestion information; and transmitter 111 for transmitting the generated control information to the terminal apparatus.

## Description

### Technical Field

The invention relates to data assignment scheduling methods in a wireless communication system that performs communication between a communication control apparatus and a communication terminal apparatus using a frequency channel composed of two or more sub-channels defined in a certain frequency band.

### Background Art

Currently, demands for data communication has been growing increasingly, and with the increase in data communication amount, various techniques have been proposed to obtain higher frequency efficiency. One of the known techniques for potentially enhancing frequency efficiency is the Orthogonal Frequency Division Multiple Access (OFDMA), in which the OFDM is used as a modulation scheme for communication and the Time Division Multiple Access (TDMA) is used as an access scheme.

The High Speed Downlink Packet Access (HSDPA) is one of the scheduling methods applicable to those OFDMA systems. As for the HSDPA, a technique has been proposed in which communication terminal apparatuses report Channel Quality Indicators (CQIs), information indicating the downlink states in all sub-carriers to a base station, and in which the station performs packet scheduling based on the CQI of each of the sub-carriers reported from each of the communication terminal apparatuses (Non-patent Document 1).

Also, for a send data scheduling method in OFDM systems that use a plurality of sub-carriers, an invention has been disclosed in which communication terminal apparatuses evaluate each downlink channel state (frequency characteristic) and report quantized information of each of the channel state using uplink feedback channels to a base station, and the station determines sub-carriers to be assigned to each of the communication terminal apparatuses based on the reported information (Patent document 1) .

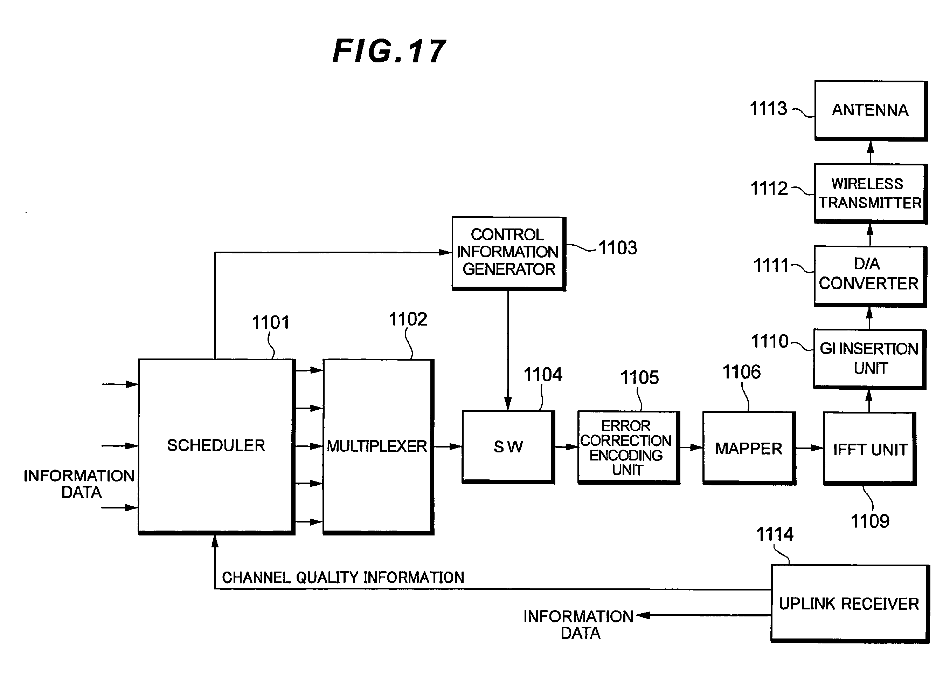

Fig. 17 illustrates an exemplary configuration of a conventional base station (communication control apparatus). Scheduler 1101 buffers information for each terminal (communication terminal apparatus), assigns data to each sub-channel's slot based on channel quality information fed back from each terminal, and determines slot assignment in a frame. Multiplexer 1102 assembles send data for each sub-channel. Control information generator 1103 generates control information to be placed on the head of a frame based on assignment information from scheduler 1101. Switch 1104 switches a signal to be sent to subsequent stages between controller information and information data. Error correction encoding unit 1105 applies error correction encoding to data. Mapper 1106 assigns information bits to each sub-carrier based on the assignment information of scheduler 1101.

Inverse Fast Fourier Transformation (IFFT) unit 1109 transforms a signal for each sub-carrier into a time-base signal. Guard Interval (GI) insertion unit 1110 adds a guard interval to a signal. D/A converter 1111 converts a digital signal to an analog signal. Wireless transmitter 1112 converts a base band signal output from D/A converter 1111 into a RF band to be used in order to amplify the signal to necessary transmission power. Antenna 1113 includes an antenna for sending the output of wireless transmitter 1112 in the air. Uplink receiver 1114 receives an uplink signal sent from a terminal and demodulates channel quality information and information data.

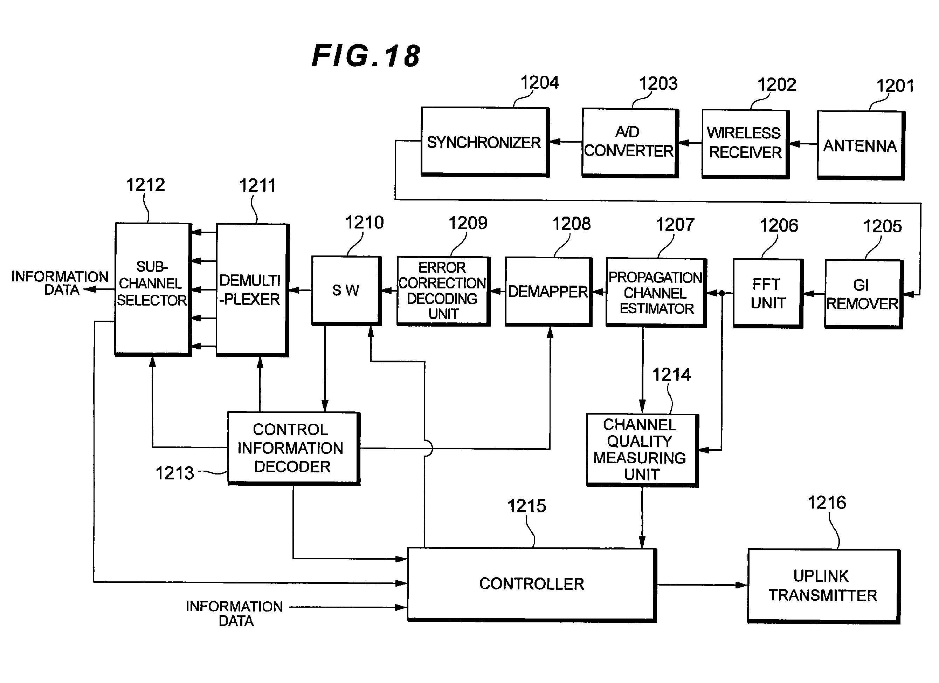

Fig. 18 illustrates an exemplary configuration of a conventional communication terminal apparatus. Antenna 1201 includes an antenna for receiving a signal. Wireless receiver 1202 retrieves necessary signals from signals received from antenna 1201 and converts them to base band signals. A/D converter 1203 converts the base band signals output from wireless receiver 1202 into digital signals. Synchronizer 1204 observes signals output from A/D converter 1203 to detect synchronization timing per OFDM symbol. Guard Interval (GI) remover 1205 removes guard intervals of the OFDM symbols according to the synchronization timings from synchronizer 1204. Fast Fourier Transformation (FFT) unit 1206 applies FFT to signals with guard intervals removed and converts the signals into those per each sub-carrier. Propagation channel estimator 1207 estimates propagation channels from received signals and corrects the signals for each sub-carrier using the estimation.

Demapper 1208 extracts and rearranges information assigned to each sub-carrier. Error correction decoding unit 1209 performs error correction decoding to correct reception error. Switch 1210 receives signals by switching between demultiplexer 1211 and control information decoder 1213. Demultiplexer 1211 divides decoded received signals per each sub-channel. Sub-channel selector 1212 extracts necessary information from each sub-channel according to control information. Control information decoder 1213 demodulates control information of frames and communicates the information to each block. Channel quality measuring unit 1214 measures each sub-channel's quality based on outputs from FFT unit 1206 and propagation channel estimator 1207, and communicates the result to the control unit. With monitoring each block' s output, controller 1215 controls each block' s operation, and controls the content of uplink transmission containing information data. Uplink transmitter 1216 transmits uplink data to a base station.

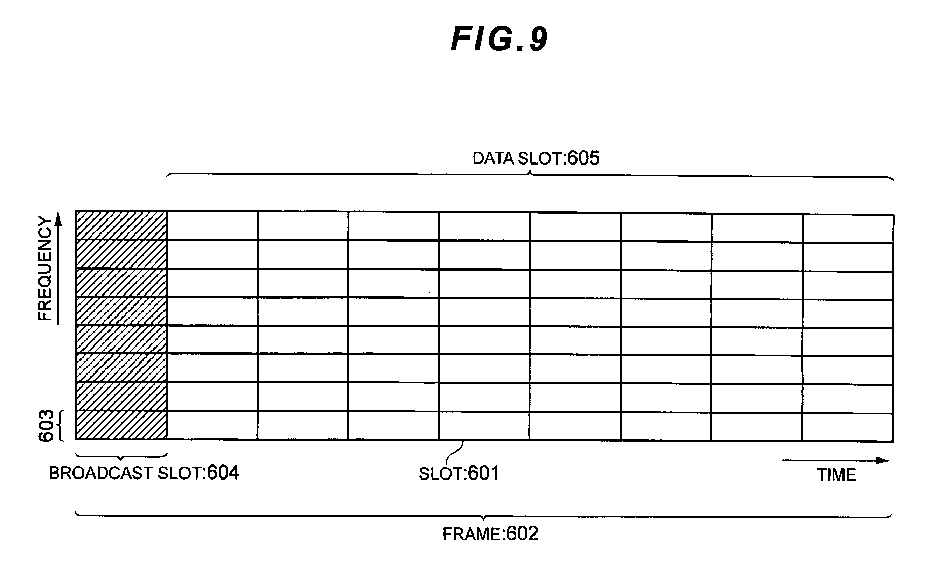

The conventional techniques described above premises a frame configuration illustrated in Fig. 9. The broadcast slot at the head of the frame includes a frame synchronization signal, a channel quality measuring signal, assignment information for subsequent data slots, and other various control signals not relevant to the invention.

A base station generates a signal having a structure illustrated in Fig. 9. Although there are a variety of scheduling methods for the configuration, a case in which the Max CIR (Carrier to Interference Ratio) method is used will be described herein. First, scheduler 1101 accommodates send data for each terminal and accumulates the data per terminal. Concurrently, scheduler 1101 receives channel quality information, in this case CIRs of each sub-channel at each terminal from uplink receiver 1114. Then scheduler 1101 assigns send data to the empty data slot of a sub-channel having the highest channel quality information among a group of terminals storing send data. In this case, at most one frame data accumulated at scheduler 1101 is assigned to the empty slot. If the size of accumulated data is less than that of one frame, slots are assigned worth all of the accumulated data. If all of the slots to be assigned have been already assigned, scheduler 1101 does nothing. After finishing the above tasks, scheduler 1101 will find a combination of a sub-channel having the next highest quality and the corresponding terminal and performs slot assignment. Scheduler 11011 repeats the above tasks until all of the slots are populated.

After finishing slot assignment, scheduler 1101 notifies control information generator 1103 of slot assignment information. Control information generator 1103 generates control information according to the assignment information. After the notification, scheduler 1101 sends to multiplexer 1102 data assigned to each sub-channel. Multiplexer 1102 assembles each sub-channel's data. At the head of a frame, first switch 1104 sends control information, and then sends data slot information. Error correction encoding unit 1105 performs error correction encoding for this information; and mapper 1106 maps the information at a processing point of IFFT unit 1109 according to the slot assignment information. However, when mapping control slot information, mapper 1106 maps according to a predefined control slot modulation scheme. Mapped data is fed into IFFT unit 1109 and converted into a time-base signal. Then GI insertion unit 1110 adds a guard interval to the signal, and the signal is converted into an analog signal at D/A converter 1111 and amplified to necessary transmission power after converted into a RF band signal at wireless transmitter 1112 and finally sent from antenna 1113.
Patent document 1: Japanese Patent Laid-Open No.200 5-130491
Non-patent Document 1: "Comments on frequency Schedul ing and joint power and rate optimization for OFDM", 3 GPP, TSG RAN WG1 Meeting #29, R1-02-1321, November, 2 002

### Disclosure of the Invention

### Problem to be Solved by the Invention

However, in a system such as OFDMA that assigns different communication terminal apparatuses to a plurality of frequency channels, when performing adaptive channel assignment for a base station to obtain the best transfer characteristic, communication terminal apparatuses must periodically notify the base station of a measuring result of the received data quality in all frequency channels. Therefore, a problem might occur that the amount of control information in uplinks increases resulting in greater overhead.

In view of the above situation, the purpose of the invention is to provide a communication control apparatus, a communication terminal apparatus, and a wireless communication system and communication method for reducing the amount of received data quality information reported by communication terminal apparatuses based on communication congestion status. Means for Solving the Problem

(1) In order to achieve the above purpose, an embodiment of the invention takes the following means. That is, a communication control apparatus of the invention is applied to a wireless communication system in which transmission from the communication control apparatus to a communication terminal apparatus is performed using frequency channels composed of two or more sub-channels defined by a predetermined frequency band and includes: a scheduler for assigning information data to be sent to the communication terminal apparatus, to each sub-channel; a congestion information generator for generating congestion information indicating the congestion degree of each of the sub-channel; a control information generator for generating control information containing the generated congestion information; a transmitter for transmitting the generated control information to the communication terminal apparatus; and a receiver for receiving assignment requesting sub-channel information identifying the sub-channels selected by the communication terminal apparatus based on the congestion information, wherein the scheduler assigns the information data to each sub-channel based on the received assignment requesting sub-channel information.

In this manner, a communication control apparatus of the invention notifies a communication terminal apparatus of congestion information (congestion degree) of each sub-channel. This allows the communication terminal apparatus to determine, based on the notified congestion information, sub-channels notifying reception quality information. Consequently, the communication control apparatus can reduce the amount of feedback information (reception quality information) received from the communication terminal apparatus, as well as perform efficient scheduling. That is, by selecting sub-channels based on both reception quality information and congestion information, the communication terminal apparatus can select a sub-channel likely to be assigned while keeping reception quality at a predetermined level; and the communication control apparatus need not analyze reception quality information of all sub-channels, and by analyzing the reception quality information of the sub-channels selected by the communication terminal apparatus, can achieve efficient scheduling while keeping reception quality at a predetermined level. Also, the scheduler can perform efficient scheduling based on assignment requesting sub-channel information notified by the communication terminal apparatus.

(2) According to another embodiment of the invention, the receiver of the communication control apparatus receives assignment requesting sub-channel information further containing reception quality information of the selected sub-channel.

In this manner, by the receiver receiving the assignment requesting sub-channel information that further contains the reception quality information of sub-channels, the scheduler can perform scheduling further in the light of the reception quality information.

(3) According to yet another embodiment of the invention, the congestion information generator of the communication control apparatus determines sub-channel count information specifying the number of sub-channels of which the communication terminal apparatus requests assignment; the transmitter sends control information containing the determined sub-channel count information; the scheduler assigns information data to each sub-channel based on assignment requesting sub-channel information identifying sub-channels specified in the sub-channel count information.

In this manner, the congestion information generator can specify the number of sub-channels included in the assignment requesting sub-channel information notified by the communication terminal apparatus. This allows for adjusting based on communication congestion degree the number of sub-channels each terminal can request. Also, as the scheduler only needs to analyze the reception quality information of the specified sub-channels, it can perform efficient scheduling.

(4) According to still another embodiment of the invention, the congestion information generator of the communication control apparatus generates congestion information classified in multiple levels.

With this configuration, the congestion information generator can notify the communication terminal apparatus of the classified congestion information.

(5) According to yet still another embodiment of the invention, the scheduler of the communication control apparatus includes buffers for each sub-channel having information data in a send wait state among information data assigned to each sub-channel, the congestion information generator generates congestion information based on the amount of information data in a send wait state of each sub-channel stored in the buffers.

In this manner, the congestion information generator can determine congestion status based on the amount of information data in a send wait state as congestion information for each sub-channel. This allows sub-channels carrying much information data in a send wait state to be notified to a communication terminal apparatus as having a high congestion degree. The apparatus can generate assignment requesting sub-channel information considering reception quality information in addition to the amount of information data in a send wait state.

(6) According to another embodiment of the invention, the congestion information generator of the communication control apparatus takes usage frequency of each sub-channel as congestion information.

In this manner, the congestion information generator can determine congestion status based on usage frequency of each sub-channel. This allows sub-channels of high usage rate to be notified to a communication terminal apparatus as having a high congestion degree. The apparatus can generate assignment requesting sub-channel information considering reception quality information in addition to the usage rate.

(7) According to another embodiment of the invention, communication between the communication control apparatus and the communication terminal apparatus is performed using the Orthogonal Frequency Division Multiple Access (OFDMA) scheme.

In this manner, the invention may be applied to a communication apparatus utilizing the OFDMA scheme.

(8) According to another embodiment of the invention, a communication terminal apparatus is applied to a wireless communication system in which transmission from a communication control apparatus to a communication terminal apparatus is performed using frequency channels composed of two or more sub-channels defined by a predetermined frequency band and includes: a receiver for receiving control information; a reception quality measuring unit for measuring reception quality of each sub-channel to generate reception quality information; a sub-channel request generator for selecting sub-channels requesting assignment as assignment requesting sub-channels based on the received control information in order to generate assignment requesting sub-channel information for identifying the selected assignment requesting sub-channels; and a transmitter for transmitting the generated assignment requesting sub-channel information to the communication control apparatus.

In this manner, a communication terminal apparatus of the invention can determine sub-channels for notifying reception quality information based on control information. Consequently, the communication terminal apparatus can reduce the amount of feedback information (reception quality information) to be notified to a communication control apparatus and enable the control apparatus to perform efficient scheduling.

(9) According to yet another embodiment of the invention, a communication terminal apparatus is applied to a wireless communication system in which transmission from a communication control apparatus to a communication terminal apparatus is performed using frequency channels composed of two or more sub-channels defined by a predetermined frequency band and includes: a receiver for receiving control information containing congestion information indicating congestion degree of each sub-channel; a reception quality measuring unit for measuring reception quality of each sub-channel to generate reception quality information; a sub-channel request generator for selecting sub-channels requesting assignment as assignment requesting sub-channels based on the congestion information included in received control information in order to generate assignment requesting sub-channel information for identifying the selected assignment requesting sub-channels; and a transmitter for transmitting the generated assignment requesting sub-channel information to the communication control apparatus.

In this manner, a communication terminal apparatus of the invention can determine a sub-channel for notifying reception quality information based on notified congestion information. Therefore, the communication terminal apparatus can reduce the amount of feedback information (reception quality information) to be notified to a communication control apparatus and enable the control apparatus to perform efficient scheduling. Also, by selecting sub-channels based on both reception quality information and congestion information, it is possible to select sub-channels likely to be assigned while keeping reception quality at a predetermined level.

(10) According to still another embodiment of the invention, the sub-channel request generator of the communication terminal apparatus generates assignment requesting sub-channel information further containing reception quality information about the selected sub-channel.

In this manner, the sub-channel request generator can notify reception quality by generating the assignment requesting sub-channel information further containing reception quality information.

(11) According to yet still another embodiment of the invention, the receiver of the communication terminal apparatus receives control information containing sub-channel count information specifying the number of the assignment requesting sub-channel, and the sub-channel request generator selects sub-channels specified in the sub-channel count information included in the control information to generate the assignment requesting sub-channel information.

In this manner, the sub-channel request generator, thanks to the notification of sub-channel count information, can recognize the number of sub-channels desired by the communication control apparatus, leading to efficient scheduling.

(12) According to another embodiment of the invention, the sub-channel request generator of the communication terminal apparatus selects sub-channels having smaller congestion degree than a predetermined congestion degree.

In this manner, the sub-channel request generator can avoid selecting congested sub-channels by selecting sub-channels having smaller congestion degree than a predefined threshold.

(13) According to yet another embodiment of the invention, the sub-channel request generator of communication terminal apparatus selects sub-channels having higher reception quality than a predetermined threshold.

In this manner, the sub-channel request can select sub-channels keeping predetermined reception quality by selecting sub-channels having higher reception quality than a predetermined threshold.

(14) According to still another embodiment of the invention, the sub-channel request generator of the communication terminal apparatus first selects sub-channels having smaller congestion degree than a predetermined congestion degree and then selects sub-channels from the above selected sub-channels in the order of highest reception quality to lowest.

In this manner, the sub-channel request generator can select in order sub-channels having smaller congestion degree than a predetermined threshold and having higher reception quality.

(15) According to yet still another embodiment of the invention, the sub-channel request generator of the communication terminal apparatus first selects sub-channels having higher reception quality than a predetermined threshold and then selects sub-channels from the above selected sub-channels in the order of lowest smaller congestion degree to highest.

In this manner, when there are many sub-channels having high reception quality, they can be selected in the order of highest reception quality to lowest.

(16) According to another embodiment of the invention, the sub-channel request generator of the communication terminal apparatus sets a first threshold and a second threshold larger than the first threshold and selects sub-channels having smaller congestion degree than the first threshold, and if the selected sub-channels do not satisfy predetermined reception quality and there exists sub-channels having congestion degree larger than the first threshold and smaller than the second threshold, sub-channels having smaller congestion degree than the second threshold and in which the reception quality information satisfies the predetermined quality are preferentially selected as assignment requesting sub-channels.

In this manner, the sub-channel request generator can select sub-channels having smaller congestion degree than a predetermined threshold and reception quality satisfying predetermined quality. This allows for striking a balance between congestion degree and reception quality to select sub-channels.

(17) According to yet another embodiment of the invention, the sub-channel request generator of the communication terminal apparatus selects sub-channels having smaller congestion degree than a predetermined congestion degree and in addition to the selected sub-channels, selects sub-channels from those having larger congestion degree than a predetermined congestion degree in the order of highest reception quality to lowest.

In this manner, the sub-channel can first select sub-channels having smaller congestion degree than a first threshold then select sub-channels having smaller congestion degree than a second threshold in the order of highest reception quality to lowest. This allows for selecting sub-channels in the light of first congestion degree and then both congestion degree and reception quality.

(18) According to still another embodiment of the invention, the sub-channel request generator of the communication terminal apparatus selects sub-channels in the order of a value calculated from a predetermined equation using a value relating to the congestion information and that to the reception quality.

In this manner, using values indicated respectively by congestion degree and reception quality, the sub-channel request generator can calculate a metric for selecting sub-channels. Thus, by quantifying values indicated respectively by congestion degree and reception quality from an equation, a metric taking the both values into account with a predetermined rule can be used for selecting sub-channels.

(19) According to yet still another embodiment of the invention, the receiver of the communication terminal apparatus receives values as congestion information indicating the amount of information in a send wait state in each sub-channel, and the sub-channel request generator, using as a value relating to the congestion information, the inverse of a value indicating the amount of information in a send wait state in each sub-channel, and using as a value relating to the reception quality, results of measuring the reception quality of each sub-channel, selects sub-channels in the descending order of value obtained by multiplying the value relating to the congestion information and that to the reception quality.

In this manner, using the multiplication of the inverse of the amount of information in a send wait state and a value indicating reception quality, the sub-channel request generator can calculate a metric for selecting sub-channels. Thus, by quantifying values indicated respectively by congestion degree and reception quality from an equation, a metric taking the both values into account with a predetermined rule can be used for selecting sub-channels.

(20) According to another embodiment of the invention, the receiver of the communication terminal apparatus receives congestion information including a value indicating multi-level congestion degree, and the sub-channel request generator selects sub-channel requesting assignment based on the value.

In this manner, the receiver receives congestion information including a value indicating multi-level congestion degree, and the sub-channel request generator selects sub-channel requesting assignment based on the value, so sub-channels other than those carrying much information data can be selected.

(21) According to yet another embodiment of the invention, the receiver of the communication terminal apparatus receives as congestion information, usage rate indicating each sub-channel' s usage frequency, and the sub-channel request generator selects assignment requesting sub-channels based on the usage rate and the reception quality information.

In this manner, the sub-channel request generator can select sub-channels based on the usage rate of the sub-channels.

(22) According to still another embodiment of the invention, the receiver of the communication terminal apparatus receives control information including assignment information indicating the status of assignment of information data to each sub-channel, and the sub-channel request generator calculates usage rate indicating each sub-channel' s usage frequency based on the assignment information and selects assignment request channels based on the calculated usage rate and the reception quality information.

In this manner, the sub-channel request generator can select sub-channels based on their usage rate. For example, the generator can avoid selecting sub-channels of high usage rate, or select sub-channels of high usage rate and high reception quality.

(23) According to yet still another embodiment of the invention, the sub-channel request generator of the communication terminal apparatus calculates reception signal power of each sub-channel and detects usage frequency of each sub-channel based on the calculated reception signal power.

In this manner, the sub-channel request generator can calculate usage frequency of each sub-channel based on reception signal power of each sub-channel. Thus, sub-channels can be selected based on usage frequency of each sub-channel even when any congestion information cannot be obtained.

(24) According to another embodiment of the invention, the reception quality measuring unit of the communication terminal apparatus measures either reception SINR (Signal to Interference and Noise Ratio) or reception SNR (Signal to Noise Ratio) as information indicating reception quality of each sub-channel.

In this manner, SINR or SNR can be used as reception quality information.

(25) According to another embodiment of the invention, in a wireless communication system in which transmission from a communication control apparatus to a communication terminal apparatus is performed using frequency channels composed of two or more sub-channels defined by a predetermined frequency band, the communication control apparatus includes: a scheduler for assigning information data to be sent to the communication terminal apparatus to each sub-channel; a congestion information generator for generating congestion information indicating the congestion degree of each sub-channel; a control information generator for generating control information containing the generated congestion information; a transmitter for transmitting the generated control information to the communication terminal apparatus; and a receiver for receiving assignment requesting sub-channel information for the communication terminal apparatus to identify the sub-channels selected based on the congestion information, and the communication terminal apparatus includes: a receiver for receiving control information including the congestion information; a reception quality measuring unit for measuring reception quality of each sub-channel to generate reception quality information based on the received control information; a sub-channel request generator for selecting, based on congestion information included in the received control information and the generated reception quality information, sub-channels as assignment requesting sub-channels that request assignment in order to generate assignment requesting sub-channel information including sub-channels for identifying the selected assignment requesting sub-channels; and a transmitter for transmitting the generated assignment requesting sub-channel information to the communication control apparatus, wherein the scheduler determines the assignment of information data to each sub-channel based on the assignment requesting sub-channel information.

In this manner, a wireless communication system of the invention notifies a communication terminal apparatus of congestion information (congestion degree) of each sub-channel. This allows the communication terminal apparatus to determine, based on the notified congestion information, sub-channels notifying reception quality information. Consequently, the communication control apparatus can reduce the amount of feedback information (reception quality information) received from the communication terminal apparatus, as well as perform efficient scheduling. That is, by selecting sub-channels based on both reception quality information and congestion information, the communication terminal apparatus can select a sub-channel likely to be assigned while keeping reception quality at a predetermined level; and the communication control apparatus need not analyze reception quality information of all sub-channels, and by analyzing the reception quality information of the sub-channels selected by the communication terminal apparatus, can achieve efficient scheduling while keeping reception quality at a predetermined level.

(26) According to yet another embodiment of the invention, the scheduler of the wireless communication system includes buffers for each sub-channel having information data in a send wait state among information data assigned to each sub-channel, and the congestion information generator generates congestion information based on the amount of information data in a send wait state of each sub-channel stored in the buffers.

In this manner, the congestion information generator can determine congestion status based on the amount of information data in a send wait state as congestion information for each sub-channel. This allows sub-channels carrying much information data in a send wait state to be notified to a communication terminal apparatus as having a high congestion degree. The apparatus can generate assignment requesting sub-channel information considering reception quality information in addition to the amount of information data in a send wait state.

(27) According to still another embodiment of the invention, the congestion information generator of the wireless communication system generates congestion information indicating usage frequency of each sub-channel.

In this manner, the congestion information generator can determine congestion status based on usage frequency of each sub-channel. This allows sub-channels of high usage rate to be notified to a communication terminal apparatus as having a high congestion degree. The apparatus can generate assignment requesting sub-channel information considering reception quality information in addition to the usage rate.

(28) According to yet still another embodiment of the invention, a communication method of a communication control apparatus applied to a wireless communication system in which transmission from a communication control apparatus to a communication terminal apparatus is performed using frequency channels composed of two or more sub-channels defined by a predetermined frequency band includes the steps of: generating congestion information indicating congestion degree of each sub-channel; generating control information including the generated congestion information; and sending the generated control information to the terminal apparatus.

Thus, according to a communication method of the invention, a communication control apparatus of the invention notifies a communication terminal apparatus of congestion information (congestion degree) of each sub-channel. This allows the communication terminal apparatus to determine, based on the notified congestion information, sub-channels notifying reception quality information. Consequently, the communication control apparatus can reduce the amount of feedback information (reception quality information) received from the communication terminal apparatus, as well as perform efficient scheduling. That is, by selecting sub-channels based on both reception quality information and congestion information, the communication terminal apparatus can select a sub-channel likely to be assigned while keeping reception quality at a predetermined level; and the communication control apparatus need not analyze reception quality information of all sub-channels, and by analyzing the reception quality information of the sub-channels selected by the communication terminal apparatus, can achieve efficient scheduling while keeping reception quality at a predetermined level.

(29) According to another embodiment of the invention, a communication method of a communication terminal apparatus applied to a wireless communication system in which transmission from a communication control apparatus to a communication terminal apparatus is performed using frequency channels composed of two or more sub-channels defined by a predetermined frequency band includes the steps of: receiving control information including congestion information indicating congestion degree of each sub-channel; measuring reception quality of each sub-channel to generate reception quality information; selecting a sub-channel requesting assignment as an assignment requesting sub-channel based on the congestion information included in the received control information and the generated reception quality information in order to generate assignment requesting sub-channel information including sub-channels for identifying the selected assignment requesting sub-channels; and transmitting the generated assignment requesting sub-channel information to the communication control apparatus.

Thus, according to a communication method of the invention, a communication terminal apparatus can determine, based on notified congestion information, sub-channels notifying reception quality information. Consequently, a communication terminal apparatus can reduce the amount of feedback information (reception quality information) to be notified to the communication control apparatus, as well as perform efficient scheduling. In addition, by selecting sub-channels based on both reception quality information and congestion information, the communication terminal apparatus can select sub-channels likely to be assigned while keeping reception quality at a predetermined level.

(0-1) According to yet another embodiment of the invention, a communication control apparatus communicating with communication terminal apparatuses using frequency channels composed of two or more sub-channels defined by a predetermined frequency band includes: a scheduler for assigning information data to be sent to the communication terminal apparatus to each sub-channel; a congestion information generator for generating congestion information indicating congestion degree of each sub-channel; a control information generator for generating control information containing the generated congestion information; and a transmitter for transmitting the generated control information to the communication terminal apparatus.

In this manner, a communication control apparatus of the invention notifies a communication terminal apparatus of congestion information (congestion degree) of each sub-channel. This allows the communication terminal apparatus to determine, based on the notified congestion information, sub-channels notifying reception quality information. Consequently, the communication control apparatus can reduce the amount of feedback information (reception quality information) received from the communication terminal apparatus, as well as perform efficient scheduling. That is, by selecting sub-channels based on both reception quality information and congestion information, the communication terminal apparatus can select a sub-channel likely to be assigned while keeping reception quality at a predetermined level; and the communication control apparatus need not analyze reception quality information of all sub-channels, and by analyzing the reception quality information of the sub-channels selected by the communication terminal apparatus, can achieve efficient scheduling while keeping reception quality at a predetermined level.

(0-2) According to still another embodiment of the invention, the communication control apparatus further includes receiver for receiving assignment requesting sub-channel information including a sub-channel number specifying the sub-channel selected by the communication terminal apparatus based on the congestion information, wherein the scheduler assigns information data to each sub-channel based on the received assignment requesting sub-channel information.

In this manner, the scheduler can perform efficient scheduling by scheduling based on assignment requesting sub-channel information notified by the communication terminal apparatus.

(0-6) According to yet still another embodiment of the invention, the congestion information generator of the communication control apparatus generates as congestion information a value indicating a result of classifying congestion degree into multiple levels based on the amount of data in the send wait state.

In this manner, the congestion information generator can notify the communication terminal apparatus of either the amount of information data in a send wait state or a value classified into multiple levels by evaluating the information data with a predetermined threshold.

(0-9) According to another embodiment of the invention, a communication terminal apparatus communicating with a communication control apparatus using frequency channels composed of two or more sub-channels defined by a predetermined frequency band includes: a receiver for receiving control information indicating congestion degree of each sub-channel; a reception quality measuring unit for measuring reception quality of each sub-channel to generate reception quality information based on the received control information; a sub-channel request generator for selecting sub-channels requesting assignment as assignment requesting sub-channels based on at least one of the congestion information included in the received control information and the generated reception quality information in order to generate assignment requesting sub-channel information including a sub-channel number specifying the selected assignment requesting sub-channel and reception quality information about the selected sub-channel; and a transmitter for transmitting the generated assignment requesting sub-channel information to the communication control apparatus.

Thus, a communication terminal apparatus of the invention can determine, based on notified congestion information, sub-channels notifying reception quality information. Consequently, a communication terminal apparatus can reduce the amount of feedback information (reception quality information) to be notified to the communication control apparatus, as well as perform efficient scheduling. In addition, by selecting sub-channels based on both reception quality information and congestion information, the communication terminal apparatus can select sub-channels likely to be assigned while keeping reception quality at a predetermined level.

(0-11) According to yet another embodiment of the invention, the sub-channel generator of the communication terminal apparatus can select fewer sub-channels than all sub-channels in order to generate assignment requesting sub-channel information.

In this manner, as the sub-channel request generator selects sub-channels based on congestion information and reception quality information, it can select sub-channels likely to be assigned. This eliminates the need of notifying the communication control apparatus of the reception quality information of all sub-channels.

(0-12) According to still another embodiment of the invention, the receiver of the communication terminal apparatus further receives control information including sub-channel number information specifying the number of the assignment requesting sub-channel, and the sub-channel request generator generates assignment requesting sub-channel information by selecting sub-channels fewer than or equal to those specified by the sub-channel number information included in the control information.

In this manner, thanks to the notification of sub-channel number information, the sub-channel request generator can recognize the number of sub-channel desired by the communication control apparatus, leading to efficient scheduling.

(0-21) According to yet still another embodiment of the invention, the receiver of the communication terminal apparatus receives congestion information including, as a value indicating the amount of information data in a send wait state in each sub-channel, at least one of: the amount of information data in a send wait state in each sub-channel; or a value indicating a result of classifying congestion degree into multiple levels based on the amount of data in the send wait state, and the sub-channel request generator selects assignment requesting sub-channel based on the value indicating the amount of information data in a send wait state in each of the sub-channel.

In this manner, the sub-channel request generator can select sub-channels based on the amount of information data in a send wait state. This allows for the selection of sub-channels other than those carrying much information data.

(0-26) According to another embodiment of the invention, in a wireless communication system in which transmission between the communication control apparatus and a communication terminal apparatus is performed using frequency channels composed of two or more sub-channels defined by a predetermined frequency band, the communication control apparatus includes: a scheduler for assigning information data to be sent to the communication terminal apparatus to each sub-channel; a congestion information generator for generating congestion information indicating the congestion degree of each sub-channel; a control information generator for generating control information containing the generated congestion information; and a transmitter for transmitting the generated control information to the communication terminal apparatus, and the communication terminal apparatus includes: a receiver for receiving control information including the congestion information; a reception quality measuring unit for measuring reception quality of each sub-channel to generate reception quality information based on the received control information; a sub-channel request generator for selecting, based on congestion information included in the received control information and the generated reception quality information, sub-channels as assignment requesting sub-channels that request assignment in order to generate assignment requesting sub-channels including sub-channels for identifying the selected assignment requesting sub-channels; and a transmitter for transmitting the generated assignment requesting sub-channel information to the communication control apparatus.

In this manner, a wireless communication system of the invention notifies a communication terminal apparatus of congestion information (congestion degree) of each sub-channel. This allows the communication terminal apparatus to determine, based on the notified congestion information, sub-channels notifying reception quality information. Consequently, the communication control apparatus can reduce the amount of feedback information (reception quality information) received from the communication terminal apparatus, as well as perform efficient scheduling. That is, by selecting sub-channels based on both reception quality information and congestion information, the communication terminal apparatus can select a sub-channel likely to be assigned while keeping reception quality at a predetermined level; and the communication control apparatus need not analyze reception quality information of all sub-channels, and by analyzing the reception quality information of the sub-channels selected by the communication terminal apparatus, can achieve efficient scheduling while keeping reception quality at a predetermined level.

According to the invention, the amount of reception quality information reported by communication terminal apparatuses can be reduced based on congestion state of the communication. This allows for the reduction of the amount of control information to be notified from the communication terminal apparatuses to a communication control apparatus and for efficient scheduling.

### Brief Description of the Drawings

Fig. 1 illustrates an exemplary configuration of a communication control apparatus in accordance with a first embodiment of the invention.
Fig. 2 illustrates an exemplary configuration of a communication terminal apparatus in accordance with the first embodiment of the invention.
Fig. 3 illustrates a flowchart showing an exemplary operation of a wireless communication system in accordance with the first embodiment of the invention.
Fig. 4 illustrates a flowchart showing an exemplary operation of selecting sub-channels for the notification of reception quality by a communication terminal apparatus in accordance with the first embodiment of the invention.
Fig. 5 illustrates exemplary control information including congestion information.
Fig. 6 illustrates a flowchart showing an exemplary operation of a wireless communication system in accordance with a second embodiment of the invention.
Fig. 7 illustrates an exemplary internal configuration of a scheduler.
Fig. 8 illustrates exemplary transition of the amount of buffered data.
Fig. 9 illustrates an exemplary frame configuration in accordance with a third embodiment of the invention.
Fig. 10 illustrates a flowchart showing an exemplary operation of obtaining reception quality information (reception quality obtaining process) from a communication terminal apparatus in accordance with the third embodiment of the invention.
Fig. 11 illustrates a flowchart showing an exemplary operation of assigning data slots (data slot assignment process) in accordance with the third embodiment of the invention.
Fig. 12 illustrates a flowchart showing an exemplary operation of sending slot usage rate (slot usage rate sending process) in accordance with the third embodiment of the invention.
Fig. 13 illustrates an exemplary environment for executing software implementing each process in a communication control apparatus in accordance with the third embodiment of the invention.
Fig. 14 illustrates an exemplary configuration in which each component is augmented with software implementing each process in accordance with the third embodiment of the invention.
Fig. 15 illustrates a flowchart showing an exemplary operation of sending reception quality information of communication terminal apparatus 200 in accordance with the third embodiment of the invention.
Fig. 16 illustrates an exemplary reception quality comparison table used by a communication terminal apparatus in accordance with the third embodiment of the invention.
Fig. 17 illustrates an exemplary configuration of a conventional base station (communication control apparatus).
Fig. 18 illustrates an exemplary configuration of a conventional communication terminal apparatus.

### Best Modes for Carrying Out the Invention

Now, various embodiments of the invention will be described with reference to the drawings. In each of the embodiment described below, it will be described, in an OFDMA system, how a communication control apparatus broadcasts congestion status of each sub-channel (sub-carrier), and how a communication terminal apparatus efficiently selects sub-channels (sub-carriers) requesting assignment in the light of the reception quality and congestion status of each sub-channel (sub-carrier). The amount of buffered data to be transferred for each sub-channel, or the usage frequency of each sub-channel may be used for the congestion status.

Each embodiment relates to data assignment scheduling for each sub-channel in a wireless communication system that performs communication between a communication control apparatus and a communication terminal apparatus using a frequency channel composed of two or more sub-channels defined in a certain frequency band, in which scheduling is performed using congestion information indicating congestion degree. Hereinafter, for purpose of clarity, a communication control apparatus is a communication apparatus having a scheduling feature, and a communication terminal apparatus is that having a reception quality notification feature of notifying reception quality used when the control apparatus performs scheduling. However, a communication apparatus may include both the scheduling feature and the reception quality notification feature and also may include two stages of performing the scheduling feature and the notification feature. Furthermore, the invention may also be applied to a case in which a communication control apparatus and a communication terminal apparatus are almost identical and one has the scheduling feature and the other has the notification feature, and to a case in which a plurality of communication apparatuses are in equal relationship.

In each embodiment, although an aspect in which a communication control apparatus may be a basic station, and a communication terminal apparatus may be a terminal (including mobile station, such as mobile phone, wireless apparatus, mobile terminal, etc.) will be described as an example, this is not any limitations. Also, the communication terminal apparatus may be referred to simply as "terminal".

Additionally, in each embodiment described below, although an OFDMA communication system is employed and described as an example, it is not any limitations. The invention can be applied to any communication apparatus, wireless communication system, and communication method performing scheduling of data assignment to a plurality of sub-channels using congestion information.

Furthermore, each embodiment will be described using the Signal to Interference and Noise Ratio (SINR) of each frequency channel as exemplary information representing the reception quality (channel quality) of the frequency channel. However, the reception quality is not limited to the SINR, and may be propagation channel quality calculated from reception signal power and carrier signal power, or reception data quality calculated from the error rate of received data. For example, the propagation path quality calculated as described above may be the Signal to Noise Ratio (SNR), the Signal to Interference Ratio (SIR), the Carrier to Interference and Noise Ratio (CINR), the Carrier to Noise Ratio (CNR), the Carrier to Interference Ratio (CIR), or the Received Signal Strength Indicator (RSSI). Also, a metric indicating the received data quality calculated as described above may be the Bit Error Rate (BER), or the Block Error Rate (BLER).

### FIRST EMBODIMENT

In a first embodiment of the invention, by way of an example, a wireless communication system employs an OFDMA communication scheme and has M sub-channels (M>1), a communication control apparatus requests in the specified frame N reception quality information (N<M) for each sub-channel measured by a communication terminal apparatus.

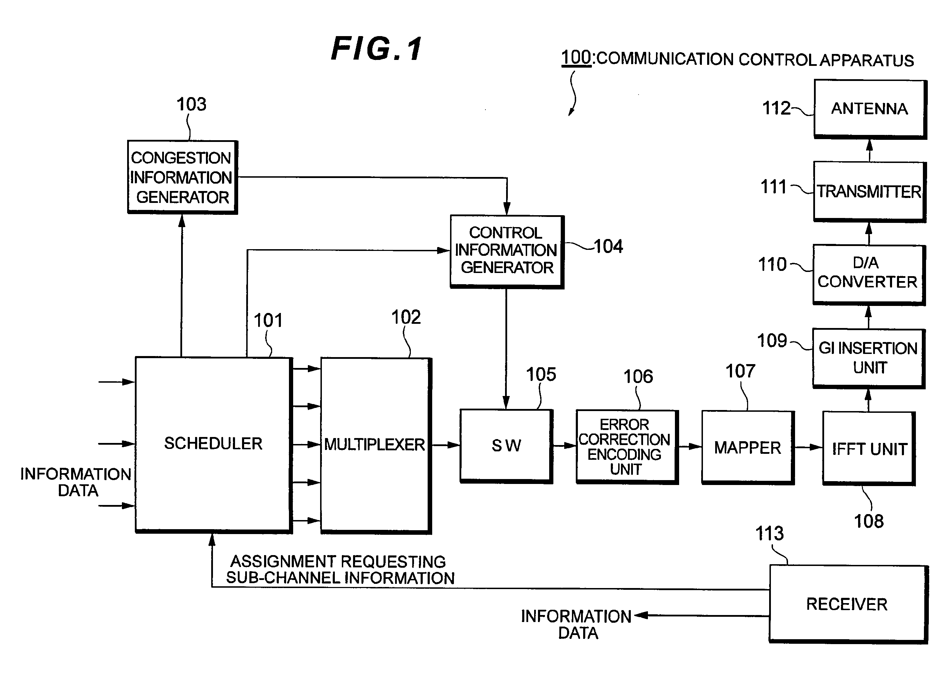

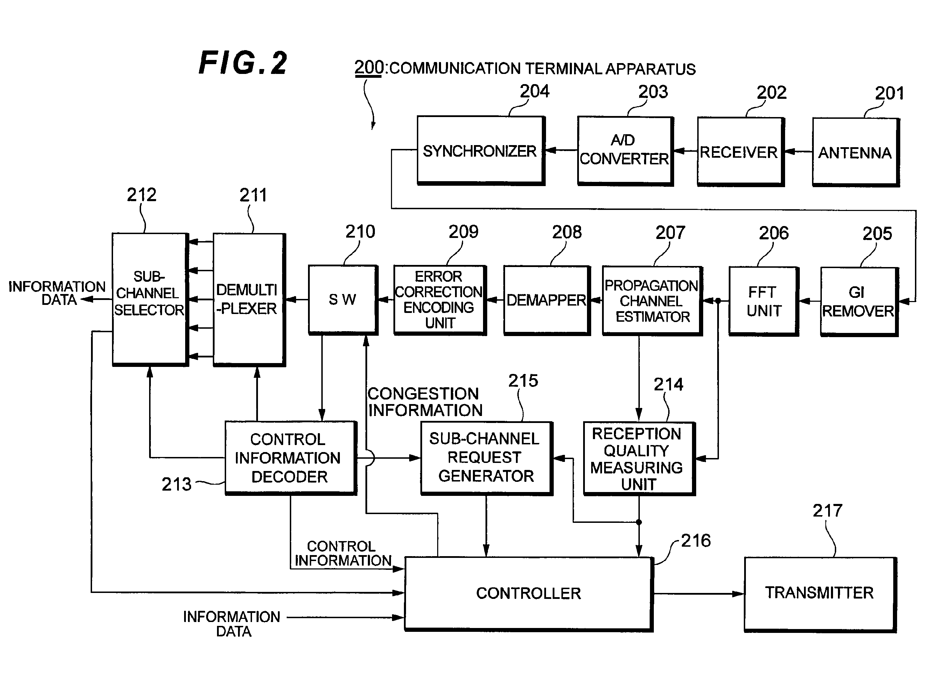

Fig. 1 illustrates a block diagram showing an exemplary configuration of a communication control apparatus in accordance with a first embodiment of the invention. Fig. 2 illustrates a block diagram showing an exemplary configuration of a communication terminal apparatus in accordance with the first embodiment of the invention. Communication control apparatus 100 illustrated in Fig. 1 includes scheduler 101, multiplexer 102, congestion information generator 103, control information generator 104, switch (SW) 105, error correction encoding unit 106, mapper 107, Inverse Fast Fourier Transformation (IFFT) unit 108, guard interval (GI) insertion unit 109, digital/analog (D/A) converter 110, transmitter (wireless transmitter, controller transmitter) 111, antenna (controller antenna) 112, and receiver (uplink receiver, controller receiver) 113.

Communication terminal apparatus 200 illustrated in Fig. 2 includes antenna (terminal antenna) 201, receiver (wireless receiver, terminal receiver) 202, analog/digital (A/D) converter 203, synchronizer 204, guard interval (GI) removal unit 205, Fast Fourier Transformation (FFT) unit 206, propagation channel estimator 207, demapper 208, error correction decoding unit 209, switch (SW) 210, demultiplexer 211, sub-channel selector 212, control information decoder 213, reception quality measuring unit 214, sub-channel request generator 215, controller 216, and transmitter (uplink transmitter, terminal transmitter) 217.

Note that in each embodiment below, although the description will be done with one communication terminal apparatus 200, there may exist a plurality of communication terminal apparatuses 200, and communication control apparatus 100 may send to/receive from the plurality of communication terminal apparatuses.

First, details of communication control apparatus 100 will be described. Scheduler 101 buffers information data destined to each communication terminal apparatus 200, assigns the data to each sub-channel based on reception quality information (reception quality measurement result, channel quality information) to be fed back from communication terminal apparatus 200, determines sub-channel assignment in frequency channels, and generates the determined assignment as assignment information. Scheduler 101 includes a send wait buffer (data memory) for each sub-channel, and temporally maintains information data in a send wait state for each sub-channel. Additionally, in this embodiment, data is assigned to generate assignment information based on assignment requesting sub-channel information sent from communication terminal apparatus 200, which will be described in detail below.

Multiplexer 102 assembles send data for each sub-channel. Congestion information generator 103 generates congestion information indicating congestion degree of each sub-channel based on assignment information generated by scheduler 101. The congestion degree represents the degree of congestion in a sub-channel based on the amount of buffered information data (congestion status). For example, based on the buffered data amount, the degree may be represented by three classes (which are divided by a predetermined threshold) of congestion degree A, B, and C.

Control information generator 104 generates control information to be placed at the head of a frame based on assignment information generated by scheduler 101 and congestion information generated by congestion information generator 103. Switch 105 switches a signal to be sent to subsequent phases (components following error correction encoding unit 106) between control information and information data. Error correction encoding unit 106 applies error correction encoding process to data. Mapper 107 assigns information bit to each sub-carrier based on assignment information from scheduler 101. IFFT unit 108 converts a signal for each sub-carrier into a time-base signal. Guard interval insertion unit 109 adds a guard interval to the time-base signal. D/A converter 110 converts a digital signal to an analog signal. Transmitter 111 converts a baseband signal output from D/A converter 110 into the Radio Frequency (RF) in order to amplify the signal to necessary power. Antenna 112 includes an antenna for transmitting the output from transmitter 111 in the air. Receiver 113 receives an uplink signal transmitted from terminals and demodulates channel quality information and information data.

It should be noted that information data to be scheduled may be that received (obtained) through a backbone connection such as priority connection, or that sent from communication terminal apparatus 200 and received by receiver 113, and is processed by scheduler 101.

Then details of communication terminal apparatus 200 will be described. Antenna 201 includes an antenna for receiving signals. Receiver 202 extracts necessary signals from those received at antenna 201 and converts them into baseband signals. A/D converter 203 converts the baseband signals output from receiver 202 into digital signals. Synchronizer 204 observes signals output from A/D converter 203 and detects synchronization timing per OFDM symbol. Guard interval removal unit 205 removes guard intervals of an OFDM symbol according to the synchronization timing obtained from synchronizer 204. FFT unit 206 applies FFT to the signal with its guard intervals removed and converts it into a signal for each sub-carrier.

Propagation channel estimator 207 estimates a propagation channel from a received signal and corrects a signal for each sub-carrier using the estimation result. Demapper 208 extracts information bits assigned to each sub-carrier and rearrange them. Error correction decoding unit 209 performs error correction decoding to correct reception error. Switch 210 receives a signal by switching demultiplexer 211 and control information decoder 213. A information data part of the received signal is fed into demultiplexer 211, and a control information part into control information decoder 213. Demultiplexer 211 divides decoded received information for each sub-channel.

Sub-channel selector 212 extracts necessary information from each sub-channel according to control information. Control information decoder 213 demodulates control information of a frame and communicates the demodulated information to each block. Specifically, control information decoder 213 notifies controller 216 of control information, extracts congestion information included in the control information, and notifies sub-channel request generator 215 of the extracted congestion information. Reception quality measuring unit 214 measures reception quality of each sub-channel from the output of FFT unit 206 and that of propagation channel estimator 207 and communicates the measured reception quality to sub-channel request generator 215 and controller 216.

Sub-channel request generator 215 determines congestion status of each sub-channel from the output information (congestion information) of control information decoder 213, and generates assignment requesting sub-channel information specifying a sub-channel sending a request (requesting assignment) based on reception quality information (channel quality information) and congestion status of each sub-channel output from reception quality measuring unit 214. Assignment requesting sub-channel information includes a sub-channel ID (an indicator for identifying a sub-channel or a sub-channel number) for indicating a sub-channel requesting assignment, and reception quality information (a combination of the sub-channel ID and reception quality information) indicating reception quality about the sub-channel. Note that the assignment requesting information may include at least a sub-channel ID, and not include reception quality information. With monitoring each block's output, controller 216 controls each block's operation as well as uplink transmission containing assignment requesting sub-channel information. A sub-channel requesting assignment is referred to as "assignment requesting sub-channel". Transmitter 217 transmits uplink data to a communication control apparatus.

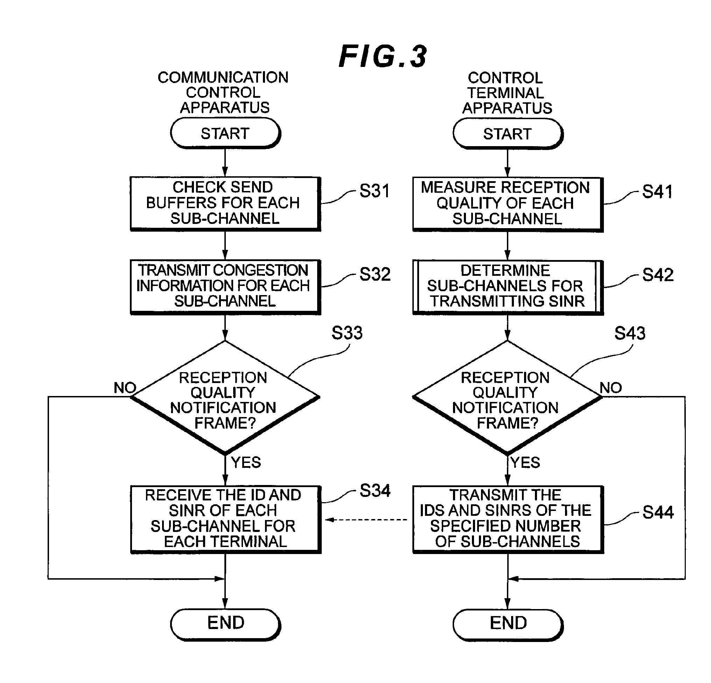

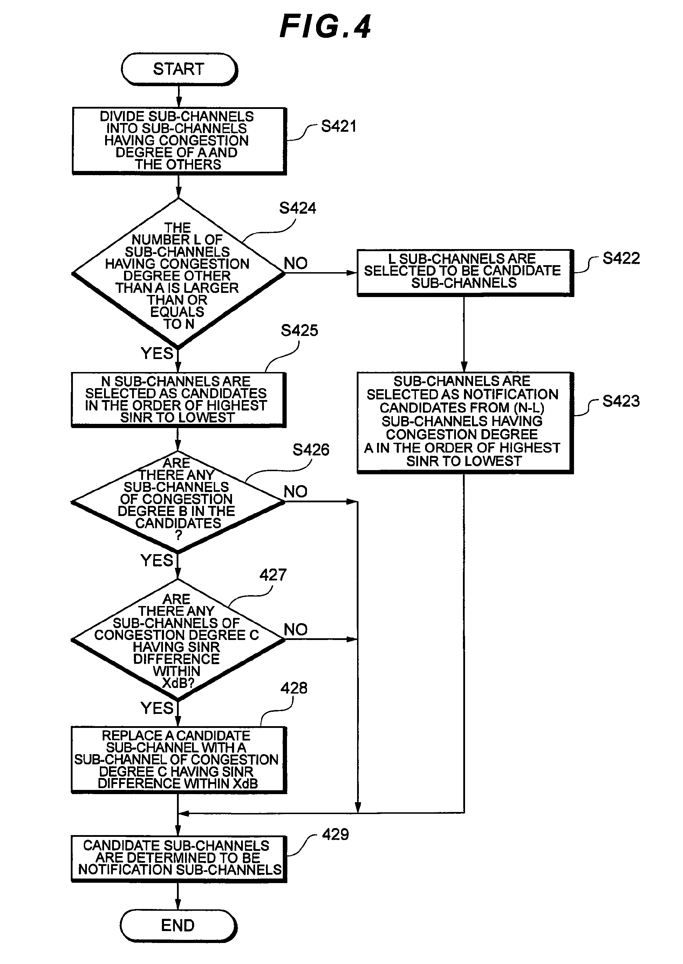

Now an exemplary operation of a wireless communication system of the embodiment will be described with reference to Fig. 3 and Fig. 4. Fig. 3 illustrates a flowchart showing an exemplary operation of a wireless communication system in accordance with this embodiment. Fig. 4 illustrates a flowchart showing an exemplary operation of selecting sub-channels for the notification of reception quality by a communication terminal apparatus in accordance with this embodiment. As described above, a wireless communication system performs communication using frequency channels composed of M sub-channels (M>1), and communication terminal apparatus 200 is assumed to notify communication control apparatus 100 of reception quality information of N sub-channels (N<M).

In communication control apparatus 100, congestion information generator 103 checks, whenever a frame is sent, a send wait buffer maintained in scheduler 101 of each sub-channel, and classifies each of the buffer based on the congestion status of each sub-channel to generate congestion information (step S31). In this embodiment, congestion information generator 103 classifies the congestion status into three classes of class A as "very congested", class B as "congested", and class C as "not full". The generated congested information is sent for each frame in a broadcast channel (step S32). The broadcast channel is defined as a channel that all communication terminal apparatuses 200 existing within a range for communication control terminal 100 can receive. In this embodiment, although the congestion information is sent for each frame, if the capacity of the broadcast channel is not enough, the information may be divided and sent in multiple frames. Alternatively, the information may be sent only once in multiple frames.

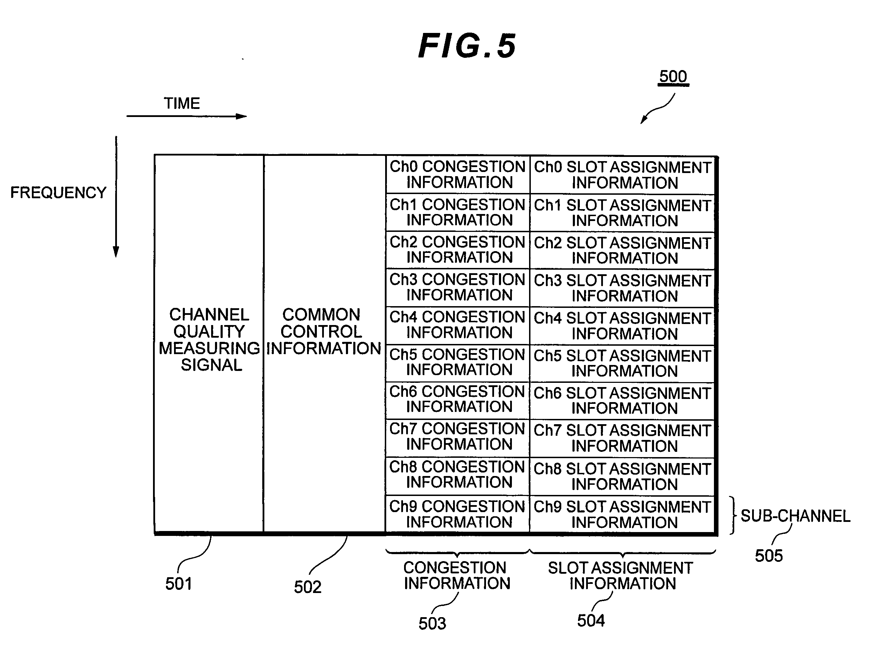

Fig. 5 illustrates exemplary control information including congestion information. Fig. 5 illustrates, among multiple slots, exemplary configuration of a control slot to which control information is assigned in a case that communication is done using a frame composed of a plurality of slots. The slot may be identified herein by one or more time slots defined by a certain time period and one or more frequency channels defined by a certain frequency band.

Control information includes channel quality measuring signal 501, common control information 502, congestion information 503, and slot assignment information 504. Also, a range indicated by sub-channel 505 represents a unit of each sub-channel's information. Channel quality measuring signal 501 is a signal for measuring reception quality of each sub-channel. As an example of measuring reception quality, a method using a power ratio (reception power ratio) is known in which a sub-carrier not sending any data is placed every several sub-carriers, and the power of sub-carriers having sent data and that of sub-carriers not having sent data is compared. Specifically, for sub-carriers carrying power and that carrying no power among a group of sub-carriers in a channel quality measuring signal to be sent, a receiver calculates SINR from the reception power ratio of sub-carriers in a received signal. Common control information 502 includes common information shared by all communication terminal 200 such as a communication control apparatus ID number or present time information. Congestion information 503 is generated for each sub-channel and placed in the range for each sub-channel 505. Slot assignment information 504 includes information indicating which communication terminal apparatus 200 is assigned to subsequent data slots and what modulation scheme is utilized. Slot assignment information 504 is also generated for each sub-channel.

Receiver 113 receives data from communication terminal apparatus 200 and confirms that the received data is a reception quality notification frame including assignment requesting sub-channel information and reception quality information (step S33). Receiver 113 receives the reception quality notification frame once in every several frames. If the received frame is a reception quality notification frame ("YES" at step S33), receiver 113 extracts assignment requesting sub-channel information (the identifier (ID) of a requested sub-channel and reception quality information) from the reception quality notification frame and notifies scheduler 101 of the information. Receiver 113 receives N pieces of reception quality information from each communication terminal apparatus 200 (step S34). Subsequently, until a next quality notification frame arrives, receiver 113 sorts sub-channels based on received SINR information to communicate with the terminals. Communication control apparatus 100 repeats step S31 to step S34 whenever sending a frame.

On the other hand, in communication terminal apparatus 200, reception quality measuring unit 214 measures reception quality based on a signal output from FFT unit 206 and that from propagation channel estimator 207 (step S41). The reception quality may be measured using a control signal sent from communication control apparatus 100. The control signal includes information known by communication terminal apparatus 200 (e.g., SINR measuring signal). Signals output from FFT unit 206 and propagation channel estimator 207 are those based on control signals received by receiver 202. Reception quality measuring unit 214 notifies sub-channel request generator 215 and controller 216 of the measured reception quality. Then sub-channel request generator 215 selects or determines a sub-channel for notifying communication control apparatus 100 of the measured reception quality (step S42). At this time, sub-channel request generator 215 selects N sub-channels. Step S42 will be described in detail below with reference to Fig. 4. Controller 216 detects a reception quality notification frame (step S43) and sends N sub-channel IDs selected using the detected frame and each sub-channel's reception quality information (assignment requesting sub-channel information) to communication control apparatus 100 (step S44).

Now, with reference to Fig. 4, steps of selecting sub-channels will be described. Sub-channel request generator 215 obtains from control information decoder 213 congestion information included in control information and based on the obtained congestion information, determines sub-channels of congestion degree A and the other sub-channels of other degrees (step S421). If the number L of sub-channels of congestion degree other than A is larger than or equals to N ("YES" at step S424), sub-channel request generator 215 selects N sub-channels as notification candidates from the above L sub-channels in the order of highest reception quality to lowest (step S425). Then sub-channel request generator 215 searches for sub-channels of congestion degree B in the N sub-channels (step S426). If there are any sub-channels of congestion degree B ("YES" at step S426), sub-channel request generator 215 examines the difference between the reception quality of the sub-channels and those of sub-channels of congestion degree C (step S427). Specifically, the SINR difference between both sub-channels is calculated. Then if the calculated difference is below XdB (X is a threshold) ("YES" at step S427), sub-channel request generator 215 replaces all relevant sub-channels (those of congestion degree C having the above SINR difference within XdB) with the candidate sub-channel, the above sub-channel of congestion degree B (step S428). Sub-channel request generator 215 determines the selected candidate sub-channel to be a notification channel (step S429).

Meanwhile, if the number L of sub-channels of congestion degree other than A is less than N ("NO" at step S424), sub-channel request generator 215 determines the L sub-channels to be candidate sub-channels (step S422). Then sub-channel request generator 215 selects as candidate sub-channels (N-L) sub-channels from those of congestion degree A in the order of highest reception quality (i.e., SINR) to lowest (step S423) and determines a combination of the above selected L sub-channels and the (N-L) sub-channels to be final sub-channels (step S429). In addition, if any sub-channels of congestion degree B are not selected as candidate sub-channels at step S426 ("NO" at step S426), that is, if all candidate sub-channels are of congestion degree C, then sub-channel request generator 215 determines the sub-channels to be notification channels at step S429.

In this manner, communication control apparatus 100 notifies communication terminal apparatus 200 of congestion information (congestion degree) of each sub-channel, and communication terminal apparatus 200 in turn determines sub-channels for notifying reception quality information based on the notified congestion information. This leads to the reduction of feedback information (reception quality information) to be notified from communication terminal apparatus 200 to communication control apparatus 100 and efficient scheduling at communication control apparatus 100. Also, sub-channel request generator 215 can select sub-channels having higher reception quality information than a predetermined value and further select sub-channels from the selected sub-channels in the order of congestion degree.

Additionally, sub-channels likely to be assigned can be selected by selecting them based on reception quality information and congestion information while keeping reception quality at a predetermined level.

Note that in the above embodiment, an example has been described in which communication terminal apparatus 200 selects the predetermined number of assignment requesting sub-channel based on congestion information and reception quality information. The number of sub-channels to be selected may be determined by communication terminal apparatus 200 or communication control apparatus 100. For example, congestion information generator 103 (or scheduler 101) of communication control apparatus 100 may generate sub-channel number information specifying the number of sub-channels requesting assignment, and control information generator 104 may notify communication terminal apparatus 200 of the sub-channel number information included in control information. Control information decoder 213 of communication terminal apparatus 200 extracts the sub-channel number information along with congestion information from control information and notifies sub-channel request generator 215 of them, and sub-channel request generator 215 selects the number of sub-channels specified in the sub-channel number information. This allows communication control apparatus 100 to adjust the number of sub-channels included in assignment requesting sub-channel information. Therefore, communication control information 100 can obtain desired pieces of reception quality information and perform efficient scheduling.

### SECOND EMBODIMENT

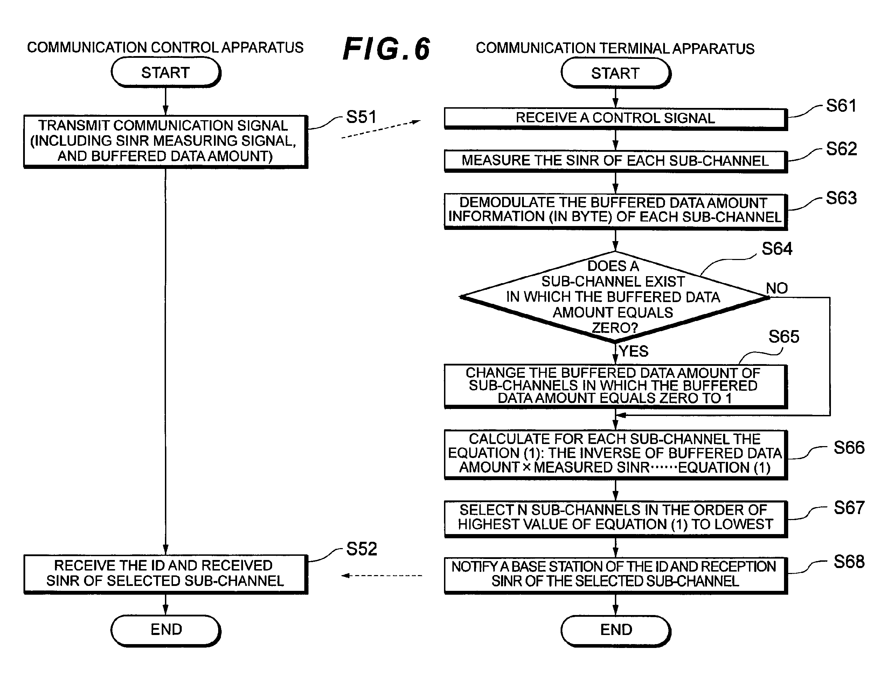

In a second embodiment of the invention, congestion status will be determined by the amount of data in a send wait state. This embodiment will be described with a similar configuration to communication control apparatus 100 and communication terminal apparatus 200 illustrated in Figs. 1 and 2 respectively. Fig. 6 illustrates a flowchart showing an exemplary operation of a wireless communication system in accordance with the embodiment.

In communication control apparatus 100, transmitter 111 transmits a control signal to communication terminal apparatus 200 (step S51). The control signal includes slot assignment information in a cell, a SINR measuring signal (one of reception quality information), and buffered data amount information. The buffered data amount information indicates how much data is being stored in a send wait buffer of each sub-channel maintained by scheduler 101. The control signal is periodically sent from communication control apparatus 100 to communication terminal apparatus 200. The buffered data amount in this embodiment is represented in byte. In this embodiment, the buffered data amount is used for a congestion status metric and congestion information.

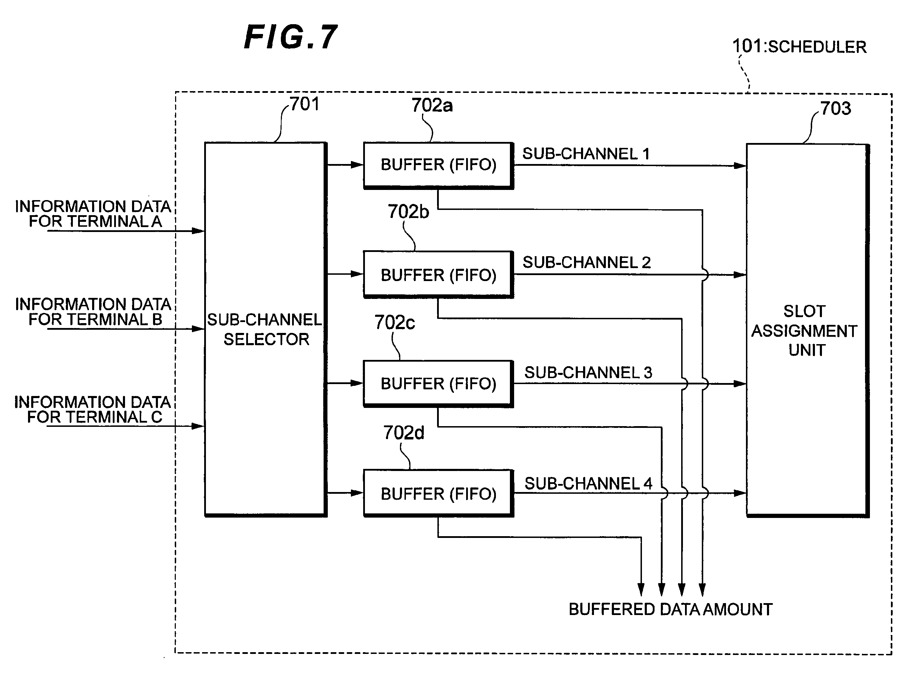

Fig. 7 illustrates an exemplary internal configuration of a scheduler 101. In the figure, signals for three control terminals 200 are assigned to four channels. Communication terminal apparatuses 200 will be described with three terminals A, B, and C. Scheduler 101 includes sub-channel selector 701, (send wait) buffers 702a to 702d, and slot assignment unit 703. Sub-channel selector 701 takes input information data from each terminal, selects sub-channels for sending information data to each terminal, and dispatches the information data to buffers 702a to 702d storing information data of the selected sub-channels. Buffers 702a to 702d are a send wait buffer maintaining (storing) sends wait data for each sub-channel. By way of an example, buffers 702a-702d are data memories of the First In First Out (FIFO) scheme. Slot assignment unit 703 assigns to corresponding slots information data dispatched to each buffer. The assigned information data are read from buffers 702a to 702d and sent to each terminal.

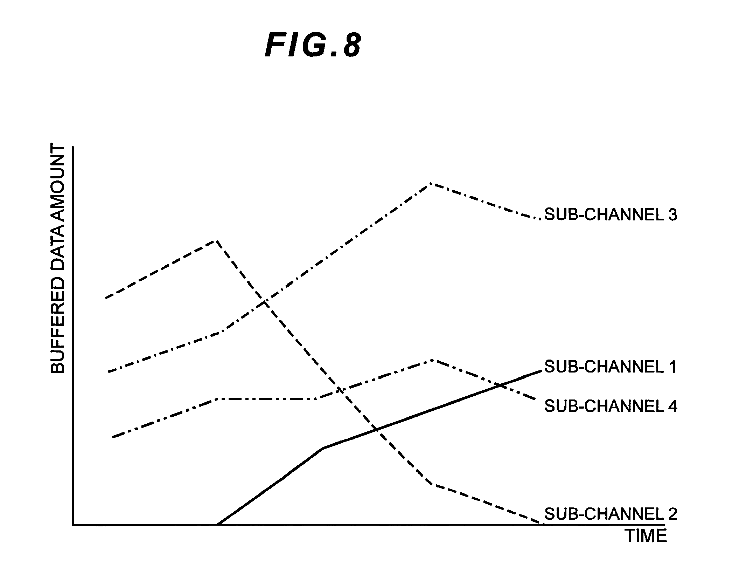

For buffers 702a to 702d, buffering data amount is defined by the amount of information data not read by slot assignment unit 703 among information data dispatched by sub-channel selector 701. The buffering data amount may vary depending on the data amount of sending request for each terminal and the data amount assigned to each slot. If a slot has enough assigned data amount, then less data needs to be buffered. Otherwise, more data needs to be buffered. Fig. 8 illustrates an exemplary transition of buffered data amount. The buffered data amount is notified from scheduler 101 to control information generator 104. Control information generator 104 generates control information including notified buffered data amount. The generated control information is sent as a control signal to each terminal at step S51.

Now the operation of each control terminal 200 after receiving a control signal will be described. Receiver 202 receives the control signal (step S61). Reception quality measuring unit 214 measures reception SINR of each sub-channel using a SINR measuring signal included in the received control signal (step S62) and stores the reception SINR of each sub-channel. Then control information decoder 213 demodulates slot assignment information in a cell and buffered data amount of each sub-channel (step S63). If a sub-channel does not include sent-waiting data at all, the buffered data amount of the sub-channel is set to zero byte.

Sub-channel request generator 215 determines whether any sub-channel has buffered data amount of zero byte (step S64). If not ("NO" at step S64), the flow goes to step S66. Otherwise ("YES" at step S64), the flow proceeds to step S65 where the buffered data amount of the sub-channel is set to 1, then proceeds to step S66. At step S66, the reception SINR for each sub-channel measured above is multiplied by the inverse of buffered data amount of each sub-channel, which can be expressed by the following equation (1).

### INVERSE OF BUFFERED DATA AMOUNT * MEASURED RECEPTION SINR

### Equation (1)

With the equation (1), the reception SINR of each sub-channel is multiplied by a weight in inverse relation to the buffered data amount of each sub-channel. Therefore, sub-channels having less buffered data amount will be multiplied by a higher value while those having much buffered data amount by a smaller one.

Sub-channel request generator 215 selects the top N sub-channels of the calculation result of equation (1) for each sub-channel (step S67), generates information of assignment requesting sub-channel desiring (requesting) the assignment of any (one or more) of the selected N sub-channels, and notifies communication control apparatus 100 of the generated information (step S68). The information is a combination of a sub-channel ID of the sub-channel and reception quality information (reception SINR) corresponding to the sub-channel ID.

Receiver 113 of communication control apparatus 100 receives assignment requesting information sent at step S68 and reception SINR of each sub-channel requesting assignment (step S52). This allows communication control apparatus 100 to recognize all sub-channels each communication terminal apparatus 200 desires to be assigned to.

Following to the above process, the slot assignment can be efficiently performed at the communication control apparatus based on notified information from each communication terminal apparatus 200.

As described above, in this embodiment, based on the multiplication of the inverse of the amount of (buffered) data stored in a send wait state in a buffer of each sub-channel and reception SINR of each sub-channel measured at each communication terminal apparatus 200, sub-channels requesting assignment are determined for each communication terminal apparatus 200. This allows for the selection of sub-channels desiring transmission based on reception SINR and buffered data amount. Additionally, equations for calculating a basis of selecting sub-channels is not limited to equation (1) described in this embodiment. For example, any other methods may be employed such as calculating the logarithm of buffered data amount and then multiplying the inverse of the generated logarithm by the reception SINR of each sub-channel, or calculating the logarithm and then subtracting it from the reception SINR.

### THIRD EMBODIMENT

In a third embodiment of the invention, slots divided by the certain number of sub-carriers and time periods are utilized in an OFDMA system, and the past usage of the slots is used as congestion status. First, a frame composed of a plurality of slots will be described.

Fig. 9 illustrates an exemplary frame configuration used in the embodiment. In the figure, frame 602 composed of a plurality of slots 601 is shown. Slot 601 may be determined by one or more time channels defined by a certain time period and by one or more frequency channels defined by a certain frequency band and are the minimum management unit. Frame 602 is a range of a management time unit. In the figure, the horizontal and vertical axes respectively represent time and frequency, and the frequency direction of a sub-channel is labeled by the reference number 603. At the head of frame 602 arranged broadcast slot 604 including a SINR measuring signal, assignment information of subsequent data slots, the congestion status of sub-channels, and other control information, followed by data slot 605 for storing communication data.

In this embodiment, an example will be described in which the invention is applied to downlink communication from communication control apparatus 100 to communication terminal apparatus 200. However, any suitable communication schemes may be used for uplink communication from communication terminal apparatus 200 to communication control apparatus 100.

In this embodiment, the usage frequency of a sub-channel may be used as congestion status, and the past slot usage rate may be used for the calculation of the frequency. Though the status of each sub-channel's propagation channel might vertiginously change due to phasing, they are likely to be averagely good channel in the long term. Therefore, the simple preferential use of sub-channels having good reception quality (SINR) would cause the increase in the usage rate of certain sub-channels and congestion. Thus, by notifying the past slot usage rate of each sub-channel to communication terminal apparatus 200, the concentration of requests of communication terminal apparatus 200 for sub-channels in which congestion is anticipated can be prevented.

Additionally, communication terminal apparatus 200 checks the reception quality and usage rate of each sub-channel, and requests the use of only sub-channels having lower usage rate than that corresponding to their reception quality.

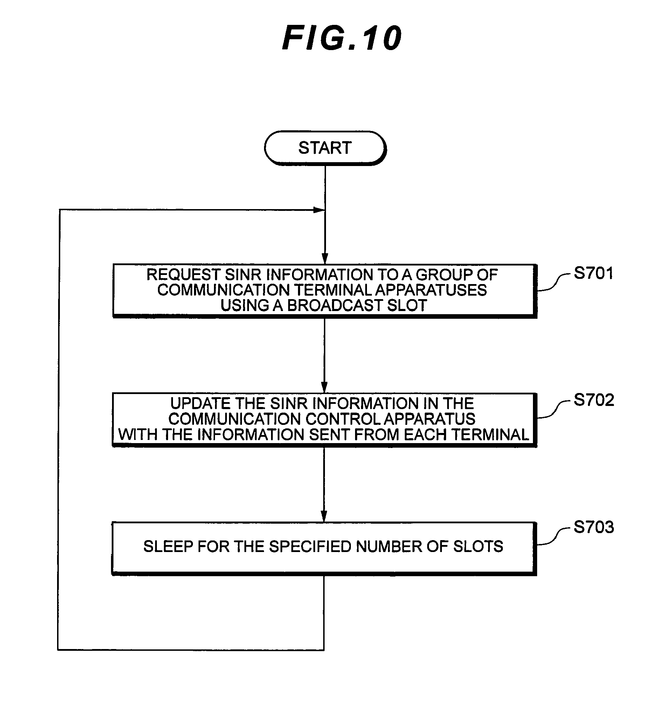

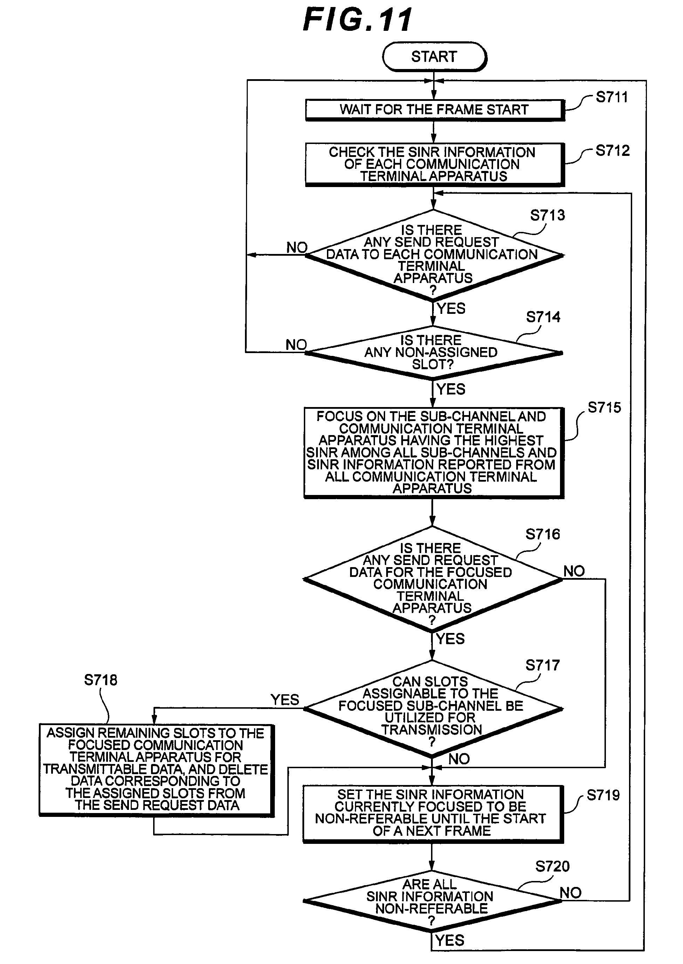

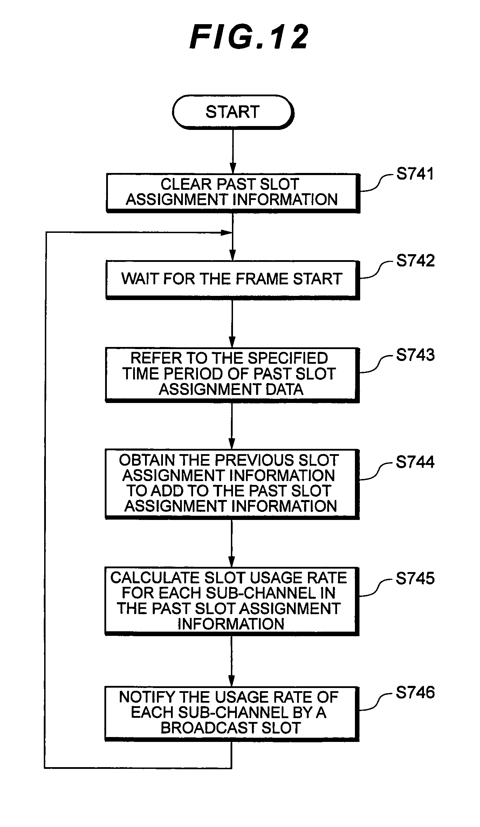

Now control process of communication control apparatus 100 will be described. Figs. 10 to 12 illustrate an example control flow of communication control apparatus 100. Fig. 10 illustrates a flowchart showing an exemplary operation of obtaining reception quality information (reception quality obtaining process) from a communication terminal apparatus 200 in accordance with the third embodiment. Fig. 11 illustrates a flowchart showing an exemplary operation of assigning data slots (data slot assignment process) in accordance with the third embodiment. Fig. 12 illustrates a flowchart showing an exemplary operation of sending slot usage rate (slot usage rate sending process) in accordance with the third embodiment. Each process is executed concurrently. Individual tasks instruct each component in communication control apparatus 100 to execute each process. Figs. 10 to 12 will be described using SINR information as an example of reception quality information.

First, a reception quality obtaining process will be described with reference to Fig. 10. The process is performed at scheduler 101. The process is a process in which communication control apparatus 100 obtains reception quality information from communication terminal apparatus 200. At communication control apparatus 100, communication information generator 104 generates control information for requesting communication terminal apparatus 200 to send reception quality information using a broadcast slot, and transmitter 111 sends the generated control information to communication terminal apparatus 200 (step S701). Then, receiver 113 receives reception quality information sent from communication terminal apparatus 200, and scheduler 101 updates the reception quality information in communication control apparatus 100 (step S702). When reception quality information sent from communication terminal apparatus 200 has any error, scheduler 101 rejects the information and uses the current reception quality information. Then, a task for the specified number of frame is set in a sleep state (wait state) (step S703). The specified frame number equals to the update frequency of reception quality information that depends on characteristics of a propagation channel. For example, the number may be a value to be updated every 10 ms. Then the flow goes back to step S701, and communication control apparatus 100 can keep reception quality information up-to-date by repeating above steps.

Now data slot assignment process will be described with reference to Fig. 11. The process is executed at scheduler 101. In this embodiment, scheduler 101 includes a buffer for storing send request data for each communication terminal apparatus 200.

In communication control apparatus 100, scheduler 101 waits for frame start time (step S711). At the start time, the flow goes to step S712. Scheduler 101 refers to reception quality information (SINR information) at the start time (step S712). Then, scheduler 101 refers to and checks in a buffer if there is any send request data destined to each communication terminal apparatus 200 (step S713). If there is no send request data destined to any communication terminal apparatus 200 ("NO" at step S713), then the flow goes back to step S711 to wait a next frame. If there is send wait data destined to any of communication terminal apparatuses 200 ("YES" at step S713), then it is checked if there remains any assignable slot (step S714). If so ("YES" at step S714), the flow proceeds to step S715. Otherwise ("NO" at step S714), the flow goes back to step S711 to wait a next frame.

Scheduler 101 focuses on a combination of the sub-channel having the best reception quality among the current reception quality information (SINR information), i.e., the highest SINR, and communication terminal apparatus 200 (step S715). Then it is checked if there is any send request data destined to the focused communication terminal apparatus 200 (step S716). If so ("YES" at step S716) then the flow goes to step S717, otherwise ("NO" at step S716) to step S719.

If the focused sub-channel has assignable slots ("YES" at step S717), scheduler 101 assigns send request data to the slots that it can send with the slots (step S718). At this time, scheduler 101 selects a bit rate corresponding to the focused communication terminal apparatus 200 and the SINR of sub-channel and performs assignment to the slots for sending in that selected bit rate. If the number of slots used by send request data destined to the focused communication terminal apparatus 200 is less than that of assignable slots, only slots to be used will be assigned. Otherwise, slots will be assigned as much as possible. Scheduler 101 deletes send request data corresponding to the assigned slots from a buffer (step S718), and the flow goes to step S719. If the focused sub-channel does not have any assignable slots ("NO" at step S717), the flow goes to step S719 without any send request data being assigned.

At step S719, SINR information (a combinational information of SINR and a sub-channel and communication terminal apparatus 200) of the focused communication terminal apparatus 200 is made not referable until the start of the next frame (so as not to be examined since the information has been already examined), and then the flow goes to step S720. At step S720, it is examined whether all SINR information is made not referable (i.e., in an examined state), if not ("NO" at step S720) then the flow goes to step S713, otherwise ("YES" at step S720) the flow goes back to step S711 to wait the start of a frame. By repeating the above steps, slots can be preferentially assigned to communication terminal apparatus 200 having the best SINR according to the current SINR information in order to perform downlink communication.

Finally, a slot usage rate obtaining process will be described with reference to Fig. 12. The process is executed at congestion information generator 103. First, congestion information generator 103 clears past slot assignment information (step S741) and waits the start of a frame (step S742). On detecting the frame start time, congestion information generator 103 refers to past slot assignment data for the specified time period (step S743). The time period is enough to calculate the average of the usage rate of slots and depends on the fluctuation of a propagation channel. The time period may be set to 100 mS, for example. Then congestion information generator 103 obtains the previous slot assignment information and adds it to the past slot assignment information (step S744). Then the slot usage rate of each sub-channel is calculated based on the past slot assignment information for the specified time period and the previous slot assignment information (step S745). Congestion information generator 103 notifies control information generator 104 of the generated slot usage rate such that each sub-channel' s usage rate can be sent using a broadcast slot at a next frame start (step S746), and then wait for the next frame start (step S742). By repeating the above steps, the slot usage rate information for the specified time period can be kept up-to-date and sent to the terminal every frame.

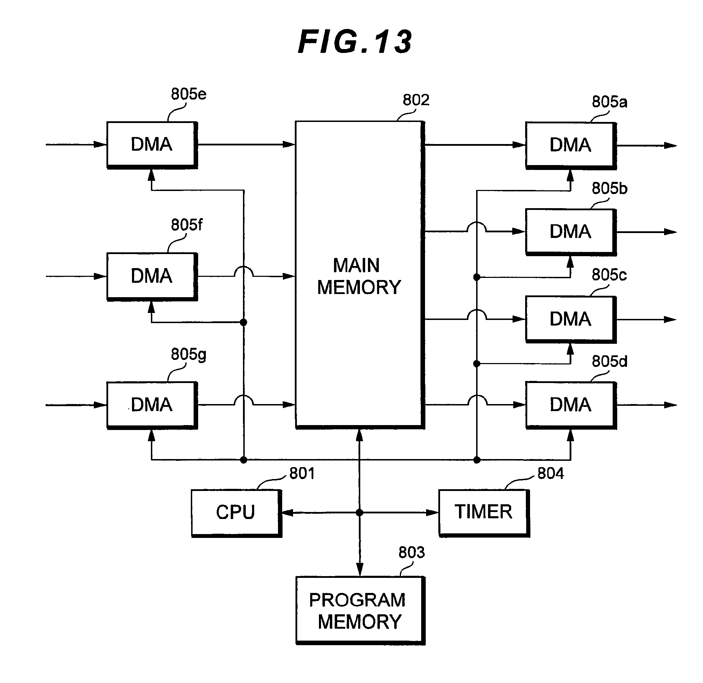

The most part of each process executed by communication control apparatus 100 described with reference to Fig. 10 to Fig. 12 may be implemented with software. Fig. 13 illustrates an exemplary environment for executing software implementing each process in communication control apparatus 100 in accordance with the third embodiment. Each process is executed by loading corresponding programs from program memory 803 to main memory 802 in control of Central Processing Unit (CPU) 801 and executing the programs. For each program, processes such as periodical activation by timer 804 or measurement of time in a send wait state are performed. In addition, data I/O with outside may be performed via Direct Memory Accesses 805a to 805g in control of CPU 801. The programs implementing each of the processes can manage buffering and sub-channel assignment in control of CPU 801. Also, each program may be a multi-task operated (scheduled) by CPU 801 and each process of the multi-task may be concurrently executed.

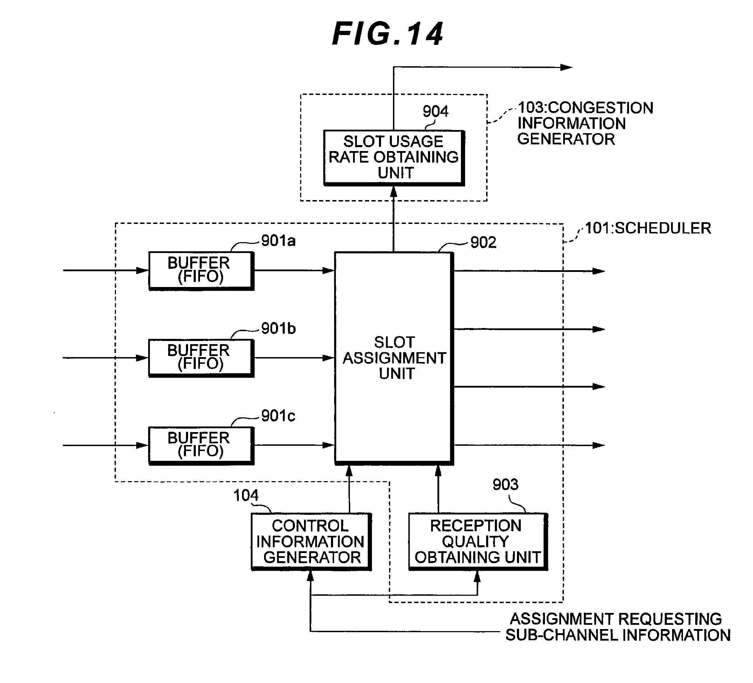

Fig. 14 illustrates an exemplary configuration in which each component is augmented with software implementing each process in accordance with the third embodiment. The figure shows scheduler 101, congestion information generator 103, and control information generator 104 illustrated in Fig. 1. Slot assignment unit 902 performs slot assignment processes using buffers 901a to 901c. In Fig. 14, though three buffers of communication terminal apparatus 200 is illustrated as an example, this is not any limitations, and any number of buffers may be used depending to the number of communication terminal apparatus 200. Reception quality obtaining unit 903 performs a reception quality obtaining process. Slot usage rate obtaining unit 904 performs a slot usage rate obtaining process.

It should be noted that Figs. 13 and 14 both illustrate mealy an exemplary configuration, so any other configuration, such as software, and a combination of software and hardware, may be used that can implement each process.

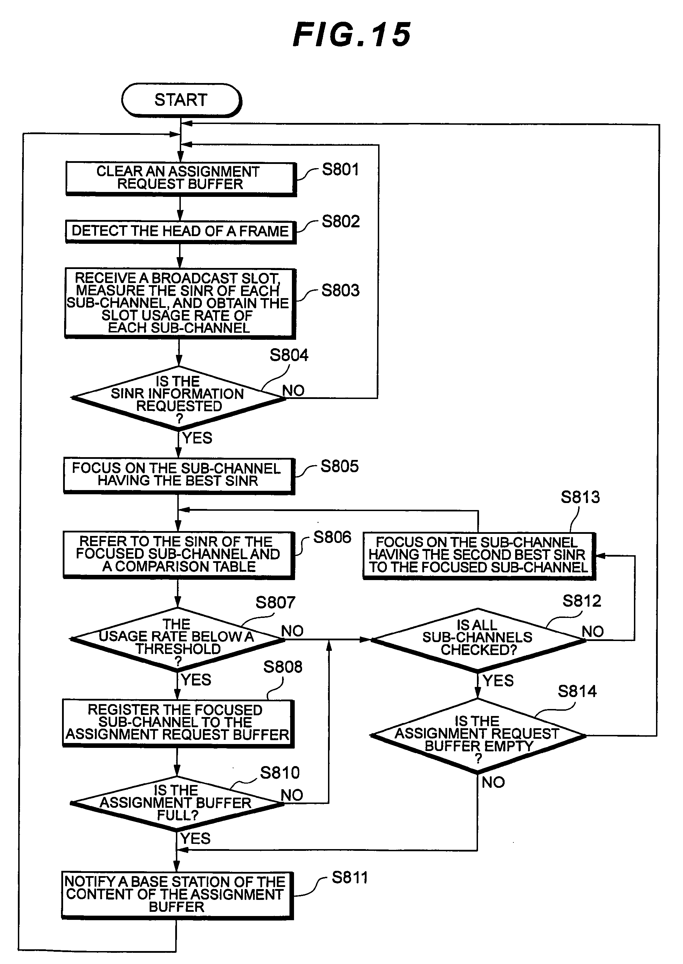

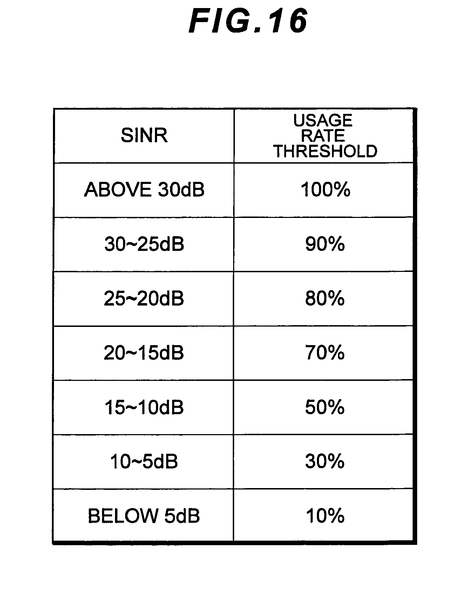

Now a sending operation of reception quality information of communication terminal apparatus 200 will be described. Fig. 15 illustrates a flowchart showing an exemplary operation of sending reception quality information of communication terminal apparatus 200 in accordance with the embodiment. Fig. 16 illustrates an exemplary reception quality comparison table used by communication terminal apparatus 200 in accordance with this embodiment. On receiving a send request of reception quality information from communication control apparatus 100, communication terminal apparatus 200 sends the information through uplink. The reception quality information (also referred to as SINR information) includes the specified number of combinations of the ID of assignment requesting sub-channel that requests assignment from communication control apparatus 100 on uplink communication and the SINR of the sub-channel. The more the specified number is, the finer the slot assignment at communication control apparatus 100 would be. However, this might raise the increase in the amount of information necessary for controlling by communication control apparatus 100. To resolve the problem, the specified number may be set to 3, for example.

The operation of communication terminal apparatus 200 will be described with reference to Fig. 15. First, sub-channel request generator 215 of communication terminal apparatus 200 clears an assignment requesting buffer (step S801). The buffer stores assignment requesting sub-channel information (a combination of the ID and SINR of the sub-channel requesting assignment sub-channel) for notifying communication control apparatus 100 and can store at most the specified number of combinations. After having cleared the buffer, communication terminal apparatus 200 waits for the start time of a frame (step S802). On detecting the time, sub-channel request generator 215 receives signals from a broadcast slot, measures each sub-channel's SINR using the signals in the broadcast slot, and obtains slot usage rate and reception quality request information for each sub-channel included in the broadcast slot (step S803). Then it is determined whether the SINR information is requested (step S804). If so ("YES" at step S804), the flow goes to step S805. Otherwise ("NO" at step S804), the flow goes back to step S801 to wait for the head of a next frame.

Sub-channel request generator 215 focuses on the sub-channel having the best measured SINR (step S805). Then the focused sub-channel' s SINR and an exemplary SINR comparison table illustrated in Fig. 16 is referred (step S806). The table shows pairs of a SINR range and a usage threshold. For a sub-channel having SINR within a range shown in the table, if the usage rate of the sub-channel is below the usage rate corresponding to the range, then an assignment request will be issued to the sub-channel. In this embodiment, when communication quality of a sub-channel is very good, i.e., more than or equals to 30 dB, an assignment request will be issued to the sub-channel independently of slot usage rate. This is because, assuming that the sub-channel has also very good communication quality for other communication terminal apparatuses 200, send request data can be continuously sent even when the sub-channel is being highly used, and it is expected that any data can be sent quickly. On the other hand, when the communication quality is bad, i.e., the SINR is below 5dB, the corresponding slot usage rate must be very low. This is because, when the sub-channel is used, data would be sent in lower bit rate in order to allow for communication even under a bad condition, and many slots would be used in inverse relation to the bit rate, and also because a situation must be avoided in which any slots cannot be assigned to other communication terminal apparatus 200 because low bit rate communication is assigned.

The slot usage rate threshold for requesting slot assignment for the SINR more than or equals to 5dB and below 30dB is set in a similar point of view. In Fig. 16, usage rate thresholds are set per 5dB, such as more than or equals to 5dB and below 10dB. Sub-channel request generator 215 determines whether a usage rate is less than or equals to a threshold by referring to the SINR comparison table and the SINR of the focused sub-channel (step S807). If the slot usage rate is less than or equals to the threshold ("YES" at step S807), then the flow goes to step S808. Otherwise it goes to step S812. At step S808 the focused sub-channels is registered in an assignment requesting buffer (step S808). Then it is checked whether the buffer is full (at step S810). If so, then the flow goes to step S811. Otherwise it goes to step S812. Sub-channel request generator 215 notifies controller 216 of assignment requesting sub-channel information stored in the assignment requesting buffer. Then the information is sent to communication control apparatus 100 by transmitter 217 via uplink (step S811). Then the flow goes back to step S801.

If the assignment request buffer is not full ("NO" at step S810), sub-channel request generator 215 checks if all sub-channels are compared with the SINR comparison table from the start of a frame to the present time (step S812). If not ("YES" at step S812), then the sub-channel having the second best, i.e, lowest SINR to the focused sub-channel is focused (step S813), and steps are repeated from step S806. Otherwise ("NO" at step S812), the content of the assignment request buffer at the present time is checked (step S814). If the buffer has no data ("YES" at step S814), then the flow goes back to step S801. Otherwise ("NO" at step S814), step S811 is performed.

By repeating the above steps, communication terminal apparatus 200 can send SINR information to communication control apparatus 100 taking the SINR and slot usage rate at that time into account whenever communication control apparatus 100 requests the SINR information.

Thus, by communication control apparatus 100 and a group of communication terminal apparatus 200 operating in the way described above, situations can be avoided in which communication requests are concentrated to certain sub-channels resulting in congestion. Furthermore, when sub-channels having particularly good communication quality can be utilized, communication capacity can be increased by preferentially utilizing the sub-channels.

In the above embodiments, methods have been described for communication terminal apparatus 200 to select, on communication control apparatus 100 broadcasting congestion status of each sub-channel within a cell, sub-channels requesting assignment based on the reception quality and congestion status of each sub-channel. However, congestion status information is not always sent every frame, and some communication terminal apparatus 200 might not able to easily receive the congestion status information depending on the status of a propagation channel. In this case, sub-channels requesting assignment might not be appropriately selected since communication terminal apparatus 200 cannot recognize the congestion status of each sub-channel. To solve this situation, the following steps may be performed.

For example, communication terminal apparatus 200 may apply a method for autonomously determining the congestion status of each sub-channel. For a frame configuration illustrated in Fig. 9, as broadcast slot 604 includes all assignment information of slots in frame 602, communication terminal apparatus 200 (e.g., sub-channel request generator 215) can recognize the assignment status for each sub-channel based on the assignment information. In addition, by observing the assignment status for each sub-channel for several frames, the congestion status for each sub-channel can be recognized.

Besides the above, communication terminal apparatus 200 can recognize the congestion status by calculating a reception signal power of each sub-channel based on the fact that sub-channels in use and those not in use can be distinguished since the power of the former sub-channels (to which communication terminal apparatus 200 is assigned) can be calculated at some level while only as low level power as a noise can be calculated for the latter sub-channels (to which communication terminal apparatus 200 is not assigned). Therefore, by observing the reception signal power of each sub-channel for several frames, frequently used sub-channels can be detected, and the congestion status for each sub-channel can be recognized at a terminal.

By utilizing above methods, even when communication terminal apparatus 200 cannot receive (recognize) congestion status, such as while communication control apparatus 100 not sending the congestion status, communication terminal apparatus 200 can autonomously determine the congestion status of each sub-channel and select sub-channels requesting assignment. Therefore, communication terminal apparatus 200 can reduce the amount of information sent to communication control apparatus 100 by selecting the sub-channels and the reception quality information of the selected sub-channels. Additionally, communication control apparatus 100 can recognize sub-channels that communication terminal apparatus 200 is requesting. Furthermore, the amount of reception quality information used by communication control apparatus 100 can be reduced. The above allows for efficient scheduling.

## Claims

1. A communication control apparatus (100) being applied to a wireless communication system in which transmission from a communication control apparatus (100) to a communication terminal apparatus (200) is performed using frequency channels composed of two or more sub-channels defined by a predetermined frequency band, said control apparatus comprising:
a scheduler (101) for assigning information data to be sent to said communication terminal apparatus, to each sub-channel;
a congestion information generator (103) for generating congestion information indicating the congestion degree of each of the sub-channel;
a control information generator (104) for generating control information containing the generated congestion information;
a transmitter (111) for transmitting the generated control information to said communication terminal apparatus; and
a receiver (113) for receiving assignment requesting sub-channel information identifying the sub-channels selected by said communication terminal apparatus based on said congestion information,
wherein said scheduler (101) assigns information data to each sub-channel based on the received assignment requesting sub-channel information.

2. The communication control apparatus (100) according to claim 1, wherein said receiver (113) receives assignment requesting sub-channel information further containing reception quality information of the selected sub-channel.

3. The communication control apparatus (100) according to claim 1, wherein
said congestion information generator (103) determines sub-channel count information specifying the number of sub-channels of which said communication terminal apparatus requests assignment,
said transmitter (111) further sends control information containing the determined sub-channel count information, and
said scheduler (101) assigns information data to each sub-channel based on assignment requesting sub-channel information identifying sub-channels specified in said sub-channel count information.

4. The communication control apparatus (100) according to claim 1, wherein said congestion information generator (103) generates congestion information classified in multiple levels.

5. The communication control apparatus (100) according to any of claims 1 to 4, wherein
said scheduler (101) includes buffers (702a-702d) for each sub-channel having information data in a send wait state among information data assigned to each sub-channel, and
said congestion information generator (103) generates congestion information based on the amount of information data in a send wait state of each sub-channel stored in said buffers (702a-702d).

6. The communication control apparatus (100) according to any of claims 1 to 5, wherein said congestion information generator (103) takes usage frequency of each sub-channel as congestion information.

7. The communication control apparatus (100) according to any of claims 1 to 6, wherein communication with said communication terminal apparatus is performed using the Orthogonal Frequency Division Multiple Access (OFDMA) scheme.

8. A communication terminal apparatus (200) being applied to a wireless communication system in which transmission from a communication control apparatus (100) to a communication terminal apparatus (200) is performed using frequency channels composed of two or more sub-channels defined by a predetermined frequency band, said terminal apparatus comprising:
a receiver (202) for receiving control information;
a reception quality measuring unit (214) for measuring reception quality of each sub-channel to generate reception quality information;
a sub-channel request generator (215) for selecting sub-channels requesting assignment as assignment requesting sub-channels based on the received control information in order to generate assignment requesting sub-channel information for identifying the selected assignment requesting sub-channels; and
a transmitter (217) for transmitting the generated assignment requesting sub-channel information to said communication control apparatus.

9. A communication terminal apparatus (200) being applied to a wireless communication system in which transmission from a communication control apparatus (100) to a communication terminal apparatus (200) is performed using frequency channels composed of two or more sub-channels defined by a predetermined frequency band, said terminal apparatus comprising:
a receiver (202) for receiving control information containing congestion information indicating congestion degree of each sub-channel;
a reception quality measuring unit (214) for measuring reception quality of each sub-channel to generate reception quality information;
a sub-channel request generator (214) for selecting sub-channels requesting assignment as assignment requesting sub-channels based on the congestion information included in received control information in order to generate assignment requesting sub-channel information for identifying the selected assignment requesting sub-channels; and
a transmitter (217) for transmitting the generated assignment requesting sub-channel information to said communication control apparatus.

10. The communication terminal apparatus (200) according to claim 9, wherein said sub-channel request generator (215) generates assignment requesting sub-channel information further containing reception quality information about the selected sub-channel.

11. The communication terminal apparatus (200) according to claim 9 or 10, wherein
said receiver (202) receives control information containing sub-channel count information specifying the number of said assignment requesting sub-channel, and
said sub-channel request generator (215) selects sub-channels specified in the sub-channel count information included in the control information to generate the assignment requesting sub-channel information.

12. The communication terminal apparatus (200) according to any of claims 9 to 11, wherein said sub-channel request generator (215) selects sub-channels having smaller congestion degree than a predetermined congestion degree.

13. The communication terminal apparatus (200) according to any of claims 9 to 11, wherein said sub-channel request generator (215) selects sub-channels having higher reception quality than a predetermined threshold.

14. The communication terminal apparatus (200) according to any of claims 9 to 11, wherein said sub-channel request generator (215) first selects sub-channels having smaller congestion degree than a predetermined congestion degree and then selects sub-channels from the above selected sub-channels in the order of highest reception quality to lowest.

15. The communication terminal apparatus (200) according to any of claims 9 to 11, wherein the sub-channel request generator (215) first selects sub-channels having higher reception quality than a predetermined threshold and then selects sub-channels from the above selected sub-channels in the order of lowest smaller congestion degree to highest.

16. The communication terminal apparatus (200) according to any of claims 9 to 11, wherein said sub-channel request generator (215) sets a first threshold and a second threshold larger than said first threshold and selects sub-channels having smaller congestion degree than said first threshold, and if the selected sub-channels do not satisfy predetermined reception quality and there exists sub-channels having congestion degree larger than said first threshold and smaller than said second threshold, sub-channels having smaller congestion degree than said second threshold and in which the reception quality information satisfies the predetermined quality are preferentially selected as assignment requesting sub-channels.

17. The communication terminal apparatus (200) according to any of claims 9 to 11, wherein said sub-channel request generator (215) selects sub-channels having smaller congestion degree than a predetermined congestion degree and in addition to the selected sub-channels, selects sub-channels from those having larger congestion degree than a predetermined congestion degree in the order of highest reception quality to lowest.

18. The communication terminal apparatus (200) according to any of claims 9 to 11, wherein said sub-channel request generator (215) selects sub-channels in the order of a value calculated from a predetermined equation using a value relating to the congestion information and that to the reception quality.

19. The communication terminal apparatus (200) according to claim 18, wherein
said receiver (202) receives values as congestion information indicating the amount of information in a send wait state in each sub-channel, and
said sub-channel request generator (215), using as a value relating to said congestion information, the inverse of a value indicating the amount of information in a send wait state in each sub-channel, and using as a value relating to said reception quality, results of measuring the reception quality of each sub-channel, selects sub-channels in the descending order of value obtained by multiplying the value relating to said congestion information and that to said reception quality.

20. The communication terminal apparatus (200) according to any of claims 9 to 19, wherein
said receiver (202) receives congestion information including a value indicating multi-level congestion degree, and
said sub-channel request generator (215) selects sub-channel requesting assignment based on said value.

21. The communication terminal apparatus (200) according to any of claims 9 to 18, wherein
said receiver (202) receives as congestion information, usage rate indicating each sub-channel's usage frequency, and
said sub-channel request generator (215) selects assignment requesting sub-channels based on said usage rate and said reception quality information.

22. The communication terminal apparatus (200) according to any of claims 9 to 18, wherein
said receiver (202) receives control information including assignment information indicating the status of assignment of information data to each sub-channel, and
said sub-channel request generator (215) calculates usage rate indicating each sub-channel's usage frequency based on said assignment information and selects assignment request channels based on the calculated usage rate and said reception quality information.

23. The communication terminal apparatus (200) according to any of claims 9 to 18, wherein said sub-channel request generator (215) calculates reception signal power of each sub-channel and detects usage frequency of each sub-channel based on the calculated reception signal power.

24. The communication terminal apparatus (200) according to any of claims 9 to 23, wherein said reception quality measuring unit (214) measures either reception SINR (Signal to Interference and Noise Ratio) or reception SNR (Signal to Noise Ratio) as information indicating reception quality of each sub-channel.

25. A wireless communication system in which transmission from a communication control apparatus (100) to a communication terminal apparatus (200) is performed using frequency channels composed of two or more sub-channels defined by a predetermined frequency band, said communication control apparatus (100) comprising:
a scheduler (101) for assigning information data to be sent to said communication terminal apparatus to each sub-channel;
a congestion information generator (103) for generating congestion information indicating the congestion degree of each sub-channel;
a control information generator (104) for generating control information containing the generated congestion information;
a transmitter (111) for transmitting the generated control information to said communication terminal apparatus; and
a receiver (113) for receiving assignment requesting sub-channel information for said communication terminal apparatus to identify the sub-channels selected based on said congestion information,
and said communication terminal apparatus (200) comprising:
a receiver (202) for receiving control information including said congestion information;
a reception quality measuring unit (214) for measuring reception quality of each sub-channel to generate reception quality information based on the received control information;
a sub-channel request generator (215) for selecting, based on congestion information included in the received control information and the generated reception quality information, sub-channels as assignment requesting sub-channels that request assignment in order to generate assignment requesting sub-channel information including sub-channels for identifying the selected assignment requesting sub-channels; and
a transmitter (217) for transmitting the generated assignment requesting sub-channel information to said communication control apparatus,
wherein said scheduler (101) determines the assignment of information data to each sub-channel based on said assignment requesting sub-channel information.

26. The wireless communication system according to claim 25, wherein
said scheduler (101) includes buffers for each sub-channel having information data in a send wait state among information data assigned to each sub-channel, and
said congestion information generator (103) generates congestion information based on the amount of information data in a send wait state of each sub-channel stored in said buffers.

27. The wireless communication system according to claim 25, wherein said congestion information generator (103) generates congestion information indicating usage frequency of each sub-channel.

28. A communication method of a communication control apparatus (100) applied to a wireless communication system in which transmission from a communication control apparatus (100) to a communication terminal apparatus (200) is performed using frequency channels composed of two or more sub-channels defined by a predetermined frequency band, said method comprising the steps of:
generating congestion information indicating congestion degree of each sub-channel;
generating control information including the generated congestion information; and
transmitting the generated control information to said terminal apparatus.

29. A communication method of a communication terminal apparatus (200) applied to a wireless communication system in which transmission from the communication control apparatus (100) to a communication terminal apparatus (200) is performed using frequency channels composed of two or more sub-channels defined by a predetermined frequency band, said method comprising the steps of:
receiving control information including congestion information indicating congestion degree of each sub-channel;
measuring reception quality of each sub-channel to generate reception quality information;
selecting a sub-channel requesting assignment as an assignment requesting sub-channel based on the congestion information included in the received control information and the generated reception quality information in order to generate assignment requesting sub-channel information including sub-channels for identifying the selected assignment requesting sub-channels; and
transmitting the generated assignment requesting sub-channel information to said communication control apparatus.

## Amended claims

### Amended claims under Art. 19.1 PCT

**1.** A communication control apparatus (100) being applied to a wireless communication system in which transmission from a communication control apparatus (100) to a communication terminal apparatus (200) is performed using frequency channels composed of two or more sub-channels defined by a predetermined frequency band, said control apparatus comprising:
a scheduler (101) for assigning information data to be sent to said communication terminal apparatus, to each sub-channel;
a congestion information generator (103) for generating congestion information indicating the congestion degree of each of the sub-channel;
a control information generator (104) for generating control information containing the generated congestion information;
a transmitter (111) for transmitting the generated control information to said communication terminal apparatus; and
a receiver (113) for receiving assignment requesting sub-channel information identifying the sub-channels selected by said communication terminal apparatus based on said congestion information,
wherein said scheduler (101) assigns information data to each sub-channel based on the received assignment requesting sub-channel information.

**2.** The communication control apparatus (100) according to claim 1, wherein said receiver (113) receives assignment requesting sub-channel information further containing reception quality information of the selected sub-channel.

**3.** The communication control apparatus (100) according to claim 1, wherein
said congestion information generator (103) determines sub-channel count information specifying the number of sub-channels of which said communication terminal apparatus requests assignment,
said transmitter (111) further sends control information containing the determined sub-channel count information, and
said scheduler (101) assigns information data to each sub-channel based on assignment requesting sub-channel information identifying sub-channels specified in said sub-channel count information.

**4.** The communication control apparatus (100) according to claim 1, wherein said congestion information generator (103) generates congestion information classified in multiple levels.

**5.** The communication control apparatus (100) according to any of claims 1 to 4, wherein
said scheduler (101) includes buffers (702a-702d) for each sub-channel having information data in a send wait state among information data assigned to each sub-channel, and
said congestion information generator (103) generates congestion information based on the amount of information data in a send wait state of each sub-channel stored in said buffers (702a-702d).

**6.** The communication control apparatus (100) according to any of claims 1 to 5, wherein said congestion information generator (103) takes usage frequency of each sub-channel as congestion information.

**7.** The communication control apparatus (100) according to any of claims 1 to 6, wherein communication with said communication terminal apparatus is performed using the Orthogonal Frequency Division Multiple Access (OFDMA) scheme.

**8.** (Canceled)

**9.** A communication terminal apparatus (200) being applied to a wireless communication system in which transmission from a communication control apparatus (100) to a communication terminal apparatus (200) is performed using frequency channels composed of two or more sub-channels defined by a predetermined frequency band, said terminal apparatus comprising:
a receiver (202) for receiving control information containing congestion information indicating congestion degree of each sub-channel;
a reception quality measuring unit (214) for measuring reception quality of each sub-channel to generate reception quality information;
a sub-channel request generator (214) for selecting sub-channels requesting assignment as assignment requesting sub-channels based on the congestion information included in received control information in order to generate assignment requesting sub-channel information for identifying the selected assignment requesting sub-channels; and
a transmitter (217) for transmitting the generated assignment requesting sub-channel information to said communication control apparatus.

**10.** The communication terminal apparatus (200) according to claim 9, wherein said sub-channel request generator (215) generates assignment requesting sub-channel information further containing reception quality information about the selected sub-channel.

**11.** The communication terminal apparatus (200) according to claim 9 or 10, wherein
said receiver (202) receives control information containing sub-channel count information specifying the number of said assignment requesting sub-channel, and
said sub-channel request generator (215) selects sub-channels specified in the sub-channel count information included in the control information to generate the assignment requesting sub-channel information.

**12.** The communication terminal apparatus (200) according to any of claims 9 to 11, wherein said sub-channel request generator (215) selects sub-channels having smaller congestion degree than a predetermined congestion degree.

**13.** The communication terminal apparatus (200) according to any of claims 9 to 11, wherein said sub-channel request generator (215) selects sub-channels having higher reception quality than a predetermined threshold.

**14.** The communication terminal apparatus (200) according to any of claims 9 to 11, wherein said sub-channel request generator (215) first selects sub-channels having smaller congestion degree than a predetermined congestion degree and then selects sub-channels from the above selected sub-channels in the order of highest reception quality to lowest.

**15.** The communication terminal apparatus (200) according to any of claims 9 to 11, wherein the sub-channel request generator (215) first selects sub-channels having higher reception quality than a predetermined threshold and then selects sub-channels from the above selected sub-channels in the order of lowest smaller congestion degree to highest.

**16.** The communication terminal apparatus (200) according to any of claims 9 to 11, wherein said sub-channel request generator (215) sets a first threshold and a second threshold larger than said first threshold and selects sub-channels having smaller congestion degree than said first threshold, and if the selected sub-channels do not satisfy predetermined reception quality and there exists sub-channels having congestion degree larger than said first threshold and smaller than said second threshold, sub-channels having smaller congestion degree than said second threshold and in which the reception quality information satisfies the predetermined quality are preferentially selected as assignment requesting sub-channels.

**17.** The communication terminal apparatus (200) according to any of claims 9 to 11, wherein said sub-channel request generator (215) selects sub-channels having smaller congestion degree than a predetermined congestion degree and in addition to the selected sub-channels, selects sub-channels from those having larger congestion degree than a predetermined congestion degree in the order of highest reception quality to lowest.

**18.** The communication terminal apparatus (200) according to any of claims 9 to 11, wherein said sub-channel request generator (215) selects sub-channels in the order of a value calculated from a predetermined equation using a value relating to the congestion information and that to the reception quality.

**19.** The communication terminal apparatus (200) according to claim 18, wherein
said receiver (202) receives values as congestion information indicating the amount of information in a send wait state in each sub-channel, and
said sub-channel request generator (215), using as a value relating to said congestion information, the inverse of a value indicating the amount of information in a send wait state in each sub-channel, and using as a value relating to said reception quality, results of measuring the reception quality of each sub-channel, selects sub-channels in the descending order of value obtained by multiplying the value relating to said congestion information and that to said reception quality.

**20.** The communication terminal apparatus (200) according to any of claims 9 to 19, wherein
said receiver (202) receives congestion information including a value indicating multi-level congestion degree, and
said sub-channel request generator (215) selects sub-channel requesting assignment based on said value.

**21.** The communication terminal apparatus (200) according to any of claims 9 to 18, wherein
said receiver (202) receives as congestion information, usage rate indicating each sub-channel's usage frequency, and
said sub-channel request generator (215) selects assignment requesting sub-channels based on said usage rate and said reception quality information.

**22.** The communication terminal apparatus (200) according to any of claims 9 to 18, wherein
said receiver (202) receives control information including assignment information indicating the status of assignment of information data to each sub-channel, and
said sub-channel request generator (215) calculates usage rate indicating each sub-channel's usage frequency based on said assignment information and selects assignment request channels based on the calculated usage rate and said reception quality information.

**23.** The communication terminal apparatus (200) according to any of claims 9 to 18, wherein said sub-channel request generator (215) calculates reception signal power of each sub-channel and detects usage frequency of each sub-channel based on the calculated reception signal power.

**24.** The communication terminal apparatus (200) according to any of claims 9 to 23, wherein said reception quality measuring unit (214) measures either reception SINR (Signal to Interference and Noise Ratio) or reception SNR (Signal to Noise Ratio) as information indicating reception quality of each sub-channel.

**25.** A wireless communication system in which transmission from a communication control apparatus (100) to a communication terminal apparatus (200) is performed using frequency channels composed of two or more sub-channels defined by a predetermined frequency band, said communication control apparatus (100) comprising:
a scheduler (101) for assigning information data to be sent to said communication terminal apparatus to each sub-channel;
a congestion information generator (103) for generating congestion information indicating the congestion degree of each sub-channel;
a control information generator (104) for generating control information containing the generated congestion information;
a transmitter (111) for transmitting the generated control information to said communication terminal apparatus; and
a receiver (113) for receiving assignment requesting sub-channel information for said communication terminal apparatus to identify the sub-channels selected based on said congestion information,
and said communication terminal apparatus (200) comprising:
a receiver (202) for receiving control information including said congestion information;
a reception quality measuring unit (214) for measuring reception quality of each sub-channel to generate reception quality information based on the received control information;
a sub-channel request generator (215) for selecting, based on congestion information included in the received control information and the generated reception quality information, sub-channels as assignment requesting sub-channels that request assignment in order to generate assignment requesting sub-channel information including sub-channels for identifying the selected assignment requesting sub-channels; and
a transmitter (217) for transmitting the generated assignment requesting sub-channel information to said communication control apparatus,
wherein said scheduler (101) determines the assignment of information data to each sub-channel based on said assignment requesting sub-channel information.

**26.** The wireless communication system according to claim 25, wherein
said scheduler (101) includes buffers for each sub-channel having information data in a send wait state among information data assigned to each sub-channel, and
said congestion information generator (103) generates congestion information based on the amount of information data in a send wait state of each sub-channel stored in said buffers.

**27.** The wireless communication system according to claim 25, wherein said congestion information generator (103) generates congestion information indicating usage frequency of each sub-channel.

**28.** A communication method of a communication control apparatus (100) applied to a wireless communication system in which transmission from a communication control apparatus (100) to a communication terminal apparatus (200) is performed using frequency channels composed of two or more sub-channels defined by a predetermined frequency band, said method comprising the steps of:
generating congestion information indicating congestion degree of each sub-channel;
generating control information including the generated congestion information; and
transmitting the generated control information to said terminal apparatus.

**29.** A communication method of a communication terminal apparatus (200) applied to a wireless communication system in which transmission from the communication control apparatus (100) to a communication terminal apparatus (200) is performed using frequency channels composed of two or more sub-channels defined by a predetermined frequency band, said method comprising the steps of:
receiving control information including congestion information indicating congestion degree of each sub-channel;
measuring reception quality of each sub-channel to generate reception quality information;
selecting a sub-channel requesting assignment as an assignment requesting sub-channel based on the congestion information included in the received control information and the generated reception quality information in order to generate assignment requesting sub-channel information including sub-channels for identifying the selected assignment requesting sub-channels; and
transmitting the generated assignment requesting sub-channel information to said communication control apparatus.
